# FASCICULE DE BREVET EUROPEEN

(11) **EP 3 891 959 B1**
(45) Date de publication et mention de la délivrance du brevet: **11.02.2026**
(21) Numéro de dépôt: 19839632.7
(22) Date de dépôt: 02.12.2019
(51) Int. Cl.: H04L 9/40, H04W 12/03, H04W 12/108, H04L 9/08, H04L 9/14, H04L 9/32, H04L 9/00, G06Q 20/06, H04L 67/12, H04W 4/70, H04W 88/16

(54) **COMMUNIQUER ENTRE DES RÉSEAUX RADIO/FIXE PAR LE BIAIS D'UNE BLOCKCHAIN**
GATEWAY ZUR KOMMUNIKATION ÜBER EIN FUNKNETZWERK MIT MINDESTENS EINEM KNOTEN UND ÜBER EIN DRAHTGEBUNDENES NETZWERK MITTELS EINER BLOCKCHAIN
GATEWAY FOR COMMUNICATING VIA RADIO NETWORK WITH AT LEAST ONE NODE AND VIA A WIRED NETWORK, BY MEANS OF A BLOCKCHAIN

(30) Priorité: 06.12.2018 FR 1872447
(43) Date de publication de la demande: 13.10.2021
(73) Titulaire: Worldline, 92800 Puteaux (FR)
(72) Inventeur: DUCROCQ, Tony, 59251 ALLENNES-LES-MARAIS (FR)
(74) Mandataire: IP Trust
(86) Numéro de dépôt international: PCT/EP2019/083335
(87) Numéro de publication internationale: WO 2020/114977

(56) Documents cités:
- US-A1- 2018 121 918
- UNKNOWN ET AL: "Using Blockchain Technology to Build Trust in Sharing LoRaWAN IoT", PROCEEDINGS OF THE 2ND INTERNATIONAL CONFERENCE ON CROWD SCIENCE AND ENGINEERING , ICCSE'17, 6 July 2017 (2017-07-06), New York, New York, USA, pages 38 - 43, XP055430008, ISBN: 978-1-4503-5375-5, DOI: 10.1145/3126973.3126980
- CHA SHI-CHO ET AL: "A Blockchain Connected Gateway for BLE-Based Devices in the Internet of Things", 23 May 2018, IEEE ACCESS, PAGE(S) 24639 - 24649, XP011684130
- WON JONGHO ET AL: "Decentralized Public Key Infrastructure for Internet-of-Things", MILCOM 2018 - 2018 IEEE MILITARY COMMUNICATIONS CONFERENCE (MILCOM), IEEE, 29 October 2018 (2018-10-29), pages 907 - 913, XP033489288, DOI: 10.1109/MILCOM.2018.8599710
- P SIVAKUMAR ET AL: "Privacy based decentralized Public Key Infrastructure (PKI) implementation using Smart contract in Blockchain", 2ND ADVANCE WORKSHOP ON BLOCKCHAIN: TECHNOLOGY, APPLICATIONS, CHALLENGES, 17 December 2017 (2017-12-17) - 3 August 2018 (2018-08-03), pages 1 - 6, XP055497247, Retrieved from the Internet <URL:https://isrdc.iitb.ac.in/blockchain/workshops/2017-iitb/papers/paper-11%20-%20Decentralized%20PKI%20in%20blockchain%20and%20Smart%20contract.pdf> [retrieved on 20180803]

## Description

### DOMAINE TECHNIQUE DE L'INVENTION

La présente invention concerne de manière générale le domaine des télécommunications dans un réseau avec des objets connectés loT, en particulier le domaine des systèmes de communication par réseau utilisant une passerelle, connectée à un objet ou à un nœud et une application destinataire des données de l'objet ou nœud.

L'invention concerne également une passerelle pour communiquer par réseau radio avec au moins un nœud ou objet et par un réseau filaire avec au moins une application ou au moins un serveur d'application d'un destinataire et un dispositif de stockage de données constituant au moins une base de données mémorisant des transactions blockchain, et l'utilisation d'une ou plusieurs passerelles dans un système pour objet connectés et applications utilisateurs.

Elle concerne en outre une méthode de communication permettant de communiquer par réseau radio avec au moins un nœud ou objet et par un réseau filaire avec au moins une application ou au moins un serveur d'application d'un destinataire par l'intermédiaire d'au moins une passerelle et d'un dispositif de stockage de données constituant au moins une base de données mémorisant des transactions blockchain.

### ETAT DE LA TECHNIQUE ANTERIEURE

La technologie LPWAN (Low-Power Wide Area Networking) ou réseau étendu, est un réseau informatique couvrant une grande zone géographique, et permettant une large variété de services et d'applications. Particulièrement, il permet de répondre aux besoins des communications de données pour l'Internet des Objets (loT). Un dispositif loT est souvent caractérisé par un petit équipement électronique qui consomme peu d'énergie pour envoyer par liaison radio une quantité limitée de données à la fois, ce qui lui permet de fonctionner durant plusieurs années avec une simple batterie.

Néanmoins, La technologie LPWAN propose un taux limité de transmission mais une modulation robuste qui permet des communications sur plusieurs kilomètres. Une telle portée permet un besoin limité de déploiement d'équipements ce qui baisse le nombre d'antennes et/ou passerelles nécessaires.

Il existe aujourd'hui différentes implémentations de la technologie LPWAN (Sigfox, NB-loT...).

LoRaWAN est l'une des implémentations de la technologie LPWAN les plus satisfaisantes, grâce à son support système « open source » et la possibilité pour n'importe qui de créer son propre réseau.

LoRaWAN utilise les ondes non licenciées du spectre radio comme le fait le réseau Wi-Fi, ce qui veut dire que n'importe qui peut utiliser ces fréquences radios sans payer de redevances pour les droits de transmission. Cette stratégie de déploiement flexible a poussé les industries et les entreprises à investir dans cette technologie. Cela leur permet soit d'utiliser un réseau public existant, soit d'installer leur propre réseau privé si ils sont soucieux de la propriété de leur réseau.

LoRaWAN est accompagné d'une facilité d'installation, est complètement libre de droits de propriété industrielle et de redevances/royalties (ce qui n'est pas le cas de Sigfox) et présente le niveau de sécurité et de confidentialité le plus résistant.

Grâce à l'aspect basse consommation (durée de vie de plusieurs années, pile bouton) et la caractéristique de longue portée, LoRaWAN a attiré l'attention des acteurs industriels pour répondre à différents besoins dans des domaines variés. Ceci, que ce soit en terme d'atouts de gestion pour le suivi et la surveillance (dans le domaine des aéroports, parkings, sites de constructions, entrepôts, commerces de détails, d'optimisation de la gestion de l'énergie, de l'aménagement du territoire, du suivi de palettes, de conteneurs de transport ; des villes « intelligentes » avec des compteurs intelligents, détecteurs pour parkings, le contrôle de l'éclairage urbain, la gestion des déchets ; ou des bâtiments et maisons « intelligents » qui peuvent détecter des fuites d'eau, contrôler des pièges à rongeur ou à termites, et tous les capteurs intelligents domestiques).

L'architecture de LoRaWAN consiste en au moins un dispositif ou capteur qui détecte et collecte des données pour les transmettre à une passerelle à portée radio, au moins une passerelle qui joue le rôle de point d'accès et envoie des paquets à un serveur réseau à travers un réseau de backhaul ; un réseau central, le serveur réseau qui reçoit tous les paquets reçus des passerelles et les dirige vers un serveur d'application, et enfin, au moins un serveur d'application qui gère l'application client et traite les données.

Ce type de système est adapté et commode du point de vue de la confidentialité et de la sécurité, mais présente l'inconvénient de, même si une passerelle LoRa peut couvrir une large zone de plusieurs kilomètres, demander des ressources considérables pour couvrir de façon indépendante la totalité de l'aire d'utilisation des dispositifs (e.g. des pays entiers). La société désirant déployer son propre réseau privé devra installer des passerelles, des serveurs d'applications et surtout un réseau central.

Dans ce contexte, il est intéressant de proposer une solution pour un réseau de communication étendu demandant moins de ressources à l'utilisateur pour son déploiement, tout en conservant un haut niveau de confidentialité et de sécurité.

Il peut aussi être intéressant de proposer une solution dans laquelle le réseau de communication pourrait être déployé par plusieurs acteurs intéressant, plutôt que dépendante d'un unique acteur.

Il est connu dans l'art antérieur plusieurs initiatives pour créer un réseau. Par exemple, le réseau PicoWAN, permet un déploiement facile et moins couteux que classiquement, mais propose une faible zone d'action, avec un besoin d'installer des passerelles pour fournir ledit réseau.

Le document de l'art antérieur "Using blockchain technology to build trust in sharing LoRaWAN loT" décrit une passerelle permettant à un objet loT de communiquer des données chiffrées à une application destinataire. Ce document considère l'utilisation d'une chaîne de blocs.

Le document de l'art antérieur *CHA SHI-CHO et al, « a blockchain connected gateway for BLE-Based Devices in the Internet of Things »* décrit une passerelle connectée à une base de données blockchain pour des objets IOT BLE (Bluetooth Low Energy). Ce document propose de créer et d'utiliser des contrats intelligents (smarts contracts) pour gérer les informations de l'objets loT et ses politiques de confidentialité. La passerelle possède en outre elle aussi un smart contract. Mais cela est réalisé dans le seul but d'enregistrer et conserver sur la base de données blockchain des préférences utilisateurs, qui sont tracées et ne peuvent alors pas être modifiées sans que cela soit visible. Mais ce document n'améliore pas la sécurité et la disponibilité d'un réseau.

### EXPOSE DE L'INVENTION

La présente invention a pour but de pallier certains inconvénients de l'art antérieur en proposant un réseau de communication pour les données de l'Internet des Objets, qui est similaire à un réseau d'opérateur comme un réseau cellulaire 2G/3G/4G, le réseau SIGFOX ou encore un réseau LoraWAN, mais sans que ledit réseau ne nécessite d'opérateur pour fonctionner ni qu'une entité ne déploie spécifiquement des antennes relais dans une zone où elle n'en a pas.

L'invention est définie par les revendications annexées.

L'invention concerne ainsi une passerelle pour communiquer par réseau radio avec au moins un nœud ou objet et par un réseau filaire avec au moins une application ou au moins un serveur d'application d'un destinataire et un dispositif de stockage de données constituant au moins une base de données mémorisant des transactions blockchain, la passerelle comprenant plusieurs modules de codes exécutables sur un ou plusieurs composants hardware de traitement tels qu'un microprocesseur pour constituer une machine, les modules étant mémorisés dans au moins un média lisible par la machine, dont au moins :
Un second module émetteur qui par l'exécution d'au moins un code sur un composant hardware envoie sur le réseau radio vers un nœud communicant avec au moins un objet connecté (D), des données mémorisées dans au moins un média lisible par la machine de la passerelle, les données comprenant au moins une clé publique éphémère (ePk) complémentaire d'une clé éphémère privée (eSk),
Un troisième module récepteur qui comprend une pluralité de codes exécutés sur un composant hardware, pour recevoir des données d'un nœud ou objet du réseau radio, les données comprenant :
   - une signature,
   - un message chiffré,
   - et une adresse blockchain de l'application ou du serveur d'application d'un destinataire (@R) liée à une transaction de blockchain créée par l'application ou le serveur d'application du destinataire (@R) comprenant une adresse IP de l'application ou du serveur d'application du destinataire, le troisième module comprend un sous-modèle de recherche qui, par l'exécution de codes sur un composant hardware, recherche une transaction à l'adresse blockchain de l'application ou du serveur d'application du destinataire et récupère ladite adresse IP de l'application ou du serveur d'application du destinataire contenue dans la transaction, et un sous-module émetteur (6) qui, par l'exécution de codes sur un composant hardware, déclenche l'envoi par protocole IP à l'adresse IP de l'application ou du serveur d'application du destinataire d'au moins :

   - le message chiffré,
   - la signature,
   - la clé publique éphémère, et
   - l'adresse blockchain de la passerelle,
Un quatrième module de gestion de blockchain comprenant :
   - au moins un sous-module de recherche qui, par l'exécution de codes sur un composant hardware, recherche une transaction ou des données de la transaction blockchain créée par le destinataire dans la base de données mémorisant les transactions blockchain et qui comporte ou résulte d'un script spécifique à clé publique éphémère (ePk), ladite recherche débutant lorsque l'envoi du message chiffré, de la clé publique éphémère et de la signature au destinataire est effectué, et ;
   - un sous module de création de transaction qui, par l'exécution de codes sur un composant hardware, crée une nouvelle transaction de blockchain à destination de la passerelle elle-même utilisant un script incorporant la clé privée éphémère (eSk) permettant de valider le script de la transaction blockchain (8) créée par le destinataire, ladite nouvelle transaction une fois validée comporte la clé eSk pour permettre de déchiffrer le message chiffré, ladite création débutant lorsque ladite transaction blockchain créée par le destinataire a été trouvée.

Ainsi l'invention a pour avantage de permettre au moins un transfert d'un message d'un nœud à un destinataire, par l'intermédiaire d'une passerelle qui ne partage pas nécessairement le même propriétaire avec le destinataire et/ou le nœud, tout en garantissant la sécurité et la confidentialité du message, la clé privée éphémère n'étant connue que de la passerelle et du nœud, acteurs tout deux dans la communication.

Suivant d'autres aspects avantageux de l'invention, la passerelle selon l'invention intègre une ou plusieurs des caractéristiques suivantes, prises isolément ou suivant toutes les combinaisons techniquement possibles :
Selon une particularité, l'évènement déclencheur de la génération et/ou l'envoi des clés privée et publique éphémères par un premier module générateur de la passerelle et/ou le second module émetteur de la passerelle peut être au moins un événement choisi dans la liste suivante :
- la réception par liaison radio (2) d'une demande de la clé publique éphémère de la part d'au moins un nœud communicant avec au moins un objet connecté,
- l'émission périodique, par un module d'émission de la passerelle, optionnellement le second module de la passerelle, d'un message de signalisation contenant la clé publique éphémère,
ou une de leurs combinaisons.

Ainsi, la génération des clés éphémères privées et/ou publiques est plus flexible et peut être déclenchée par plusieurs phénomènes qui seront choisis en fonction de la situation et des contraintes de celle-ci.

Selon une autre particularité, le quatrième module de gestion de blockchain de la passerelle comprend en outre un sous-module de vérification qui, par l'exécution de codes associé à un composant hardware, vérifie au moyen de la clé privée éphémère (eSk) que ladite transaction contient une valeur financière, et optionnellement mesure ladite valeur financière, le sous-module de vérification étant en outre configuré pour stopper la transaction si la vérification échoue ou si la valeur financière contenue dans la transaction est inférieure à une valeur préalablement négociée entre la passerelle et le nœud et mémorisée dans un média lisible par la passerelle.

L'utilisation de crypto-monnaie dans une transaction en vue d'un transfert permet d'inciter les passerelles à rentrer dans le système grâce à la rétribution potentielle prévue pour chaque transfert de données. Ladite vérification par le sous-module de vérification permet à la passerelle de ne valider la transaction que si le paiement est présent et suffisant, par exemple égal à une valeur préalablement négociée. Cela permet d'empêcher le destinataire de ne pas payer ou de payer trop peu la passerelle pour le transfert de données.

Selon une autre particularité, la passerelle, est utilisée avec un nœud communicant avec au moins un objet connecté, ou directement un objet (1), le nœud ou objet comprenant au moins un ou plusieurs modules de codes exécutables sur un ou plusieurs composants hardware de traitement tels qu'un microprocesseur pour constituer une machine, les modules étant mémorisés dans au moins un média lisible par la machine, et au moins :
Un média lisible par la machine constituant un espace de mémoire comprenant une clé privée (Sk) et une adresse blockchain du destinataire transmise par une application du destinataire ou le serveur d'application du destinataire au nœud ;
Un module récepteur qui, par l'exécution de codes sur un composant hardware, reçoit la clé publique éphémère (ePk) envoyée par la passerelle et envoyée ;
Un module générateur qui, par l'exécution de codes sur un composant hardware, génère un message (m) en réponse à des données provenant d'un objet connecté,

ledit module comprenant un sous-module de chiffrement qui, au moyen de la clé publique éphémère (ePk) envoyée par la passerelle, chiffre ce message pour obtenir le message chiffré (Em),
le sous-module de chiffrement réalisant en outre une signature, la signature (Sig) étant le chiffrement, d'un hashage du message chiffré et de la clé publique éphémère reçue de la passerelle, au moyen de la clé privée (Sk) contenue dans l'espace de mémoire du nœud,
le module générateur (N5) comprenant aussi un sous-module émetteur qui envoie la signature, le message chiffré et l'adresse blockchain du destinataire à la passerelle par le réseau radio.

Cela permet au nœud de pouvoir communiquer des données à la passerelle et de proposer un réseau de télécommunication selon l'invention qui est distribué et fiable.

Selon une autre particularité, le sous-module de chiffrement du nœud ou objet chiffre une première fois le message (m) généré par le module générateur (N5) au moyen d'une clé symétrique (K) partagée avec une application ou un serveur d'application du destinataire pour obtenir le message chiffré Ek(m) avant que le sous-module de chiffrement chiffre le message au moyen de la clé publique éphémère (ePk) envoyée parla passerelle, pour obtenir le message double chiffré (Em).

Ainsi, le message ne peut être déchiffré que par une clé (K) connue seulement du nœud ou objet et du destinataire. Le message peut être chiffré avec cette clé sur le nœud et déchiffré du côté du destinataire. Ce chiffrement est nécessaire si la confidentialité des données est requise. La passerelle ne disposant pas de la clé ne pourra pas déchiffrer le message, la confidentialité lors de l'échange avec une entité étrangère, telle qu'une passerelle qui ne partage pas le même propriétaire que le nœud et le destinataire, est conservé.

Selon une particularité, une passerelle selon l'invention peut être utilisée avec :
Un nœud ou objet selon l'invention,
Une application ou un serveur d'application du destinataire, l'application ou le serveur comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
   Un module de génération qui, par l'exécution de codes sur un composant hardware, génère et envoie la clé privée (Sk) et optionnellement la clé symétrique (K) à destination du nœud communicant avec au moins un objet connecté ;
   Un média lisible par la machine constituant un espace de mémoire comprenant une clé publique (Pk) complémentaire de la clé privée (Sk) transmise au nœud ;
   Un premier module de transaction qui, par l'exécution de codes sur un composant hardware, crée une transaction blockchain à l'adresse blockchain de l'application ou du serveur d'application du destinataire, ladite transaction blockchain comprenant l'adresse IP de l'application ou du serveur d'application du destinataire ;
   Un module récepteur qui, par l'exécution de codes sur un composant hardware, reçoit de la passerelle, par un réseau longue distance, par exemple Internet les données comprenant le message chiffré, la signature et la clé publique éphémère envoyée parla passerelle, et lors de la réception desdites données, lance un sous-module de vérification de la signature qui vérifie au moyen d'un calcul de signature au moyen de la clé privée (Sk) enregistrée dans l'espace de mémoire en comparant le résultat du calcul avec la signature reçue que la signature reçue a bien été généré par le nœud communicant avec au moins avec l'objet connecté, le module stoppant la transaction si cette vérification échoue ;
   Un module de transaction, optionnellement le premier module de transaction, qui, par l'exécution de codes sur un composant hardware, crée une transaction blockchain à l'adresse blockchain du destinataire une fois que le sous-module de vérification a effectué la vérification du message, la transaction comprenant au moins un script spécifique, utilisant la clé publique éphémère envoyée par la passerelle ;
   Le module de transaction comprenant un sous-module de recherche qui une fois le message chiffré (Em), la clé publique éphémère (ePk), et la signature (Sig) reçus, ou la transaction créée par le destinataire, recherche une transaction blockchain incorporant l'adresse blockchain de la passerelle et un script de signature utilisant la clé privée éphémère (eSk) ;
   Le module de transaction comprenant un sous-module de déchiffrement qui, une fois la transaction blockchain trouvée, utilise la clé privée éphémère (eSk) de ladite transaction pour déchiffrer le message chiffré du nœud reçu de la passerelle par le module récepteur, et préférentiellement en outre au moyen de la clé symétrique (K) partagée avec le nœud,
   Le module de transaction comprenant optionnellement en outre un sous-module de lecture/écriture et un espace mémoire dans lequel le sous-module de lecture/écriture enregistre des données et qui, une fois la transaction blockchain trouvée, enregistre la clé privée éphémère (eSk) de ladite transaction dans le média lisible par la machine de l'application ou du serveur d'application du destinataire. ,
   Avantageusement, l'utilisation d'une passerelle, d'un nœud et d'un destinataire selon l'invention permettent la mise en place d'un système pour un réseau distribué dont les différents acteurs sont susceptibles d'appartenir à des propriétaires différents et étrangers entre eux, tout en garantissant une utilisation non abusive du réseau, par l'utilisation des caractéristiques de la blockchain.

Selon une particularité, le module de transaction de la passerelle déverrouille la transaction créée par ledit module après une certaine durée, si la passerelle n'a pas débloqué la transaction durant cette durée.

Avantageusement, le destinataire peut récupérer le contenu de la transaction, dans le cas où la clé privée éphémère (eSk) n'est pas fournie à temps, par exemple si la passerelle est défectueuse. Cela incite les différents acteurs de la communication à une transmission rapide des données.

Selon une particularité, le nœud du système de communication peut utiliser un chiffrement RSA-512 pour effectuer sa signature des données.

Avantageusement, le chiffrement RSA-512 permet de limiter la taille de la charge utile à envoyer sur le réseau LoRaWAN qui est limité. Par charge utile on entend le volume de données échangé entre les différentes parties.

Selon une particularité, le quatrième module de gestion de blockchain de la passerelle comprend un sous-module de mesure du temps associé à une instruction d'attente d'un temps de confirmation après la réception d'une transaction blockchain du destinataire, préférentiellement au moins avant la réception de la transaction nécessitant de fournir la clé secrète éphémère.

Cela permettra de se prémunir face au « double spending » du destinataire, phénomène par lequel le destinataire peut successivement créer une transaction et la dépenser, ce qui lui permet de récupérer la clé éphémère privée sans récompenser la passerelle pour le transfert des données.

Selon une particularité, le quatrième module de gestion de blockchain de la passerelle attend la confirmation du minage du bloc de la blockchain par d'autres participants de la blockchain.

Avantageusement, le minage fournit une preuve cryptographique qui ne repose pas sur la confiance entre les participants ayant fourni l'information.

Selon une particularité, la passerelle comprend en outre un premier module générateur qui comprend au moins un code exécuté sur un composant hardware, pour générer la clé privée éphémère (eSk) et la clé publique éphémère (ePk) complémentaire de ladite clé éphémère privée (eSk), préférentiellement en réponse à un évènement déclencheur, et mémorise ces clés (ePk, eSk) dans un média lisible par la machine.

L'invention concerne aussi une méthode de communication entre au moins un objet connecté relié par radio soit directement à un nœud soit à au moins une passerelle communiquant par un réseau filaire avec au moins une application ou au moins un serveur d'application d'au moins un destinataire, caractérisée en ce qu'elle comprend :
une passerelle comprenant plusieurs modules de codes exécutables sur un ou
plusieurs composants hardware de traitement tels qu'un microprocesseur pour constituer une machine, les modules étant mémorisés dans au moins un média lisible par la machine dont au moins :
   Un premier module générateur
   Un second module émetteur
   Un troisième module récepteur qui comprend un sous-module émetteur,
   Un quatrième module de gestion de blockchain qui comprend au moins un sous-module de recherche et un sous-module de création de transaction ;
   un nœud d'un objet connecté comprenant au moins un ou plusieurs modules de codes exécutables sur un ou plusieurs composants hardware de traitement tels qu'un microprocesseur pour constituer une machine les modules étant mémorisés dans au moins un média lisible par la machine et au moins :
      Un média lisible par la machine
      Un module récepteur (N2)
      Un module générateur (N5) comprenant un sous-module de chiffrement et un sous-module émetteur ;
      une application ou un serveur d'application du destinataire comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
         Un module de génération
         Un média lisible par la machine
         Un premier module de transaction
         Un module récepteur comprenant un sous-module de vérification
         Un module de transaction, optionnellement le premier module de transaction comprenant un sous-module de recherche, un sous-module de lecture/écriture et un sous-module de déchiffrement
         Les modules effectuant leurs actions par l'exécution de codes sur au moins un composant hardware ;
         et qu'elle comprend au moins les étapes suivantes :
            I- Génération par le module de génération de l'application ou du serveur d'application du destinataire d'une clé publique (Pk) et enregistrement sur un média lisible par la machine constituant un espace de mémoire, puis génération et envoi de la clé privée (Sk) complémentaire de la clé publique (Pk) à destination du nœud communicant avec au moins un objet connecté, et enregistrement dans le média lisible du nœud constituant un espace de mémoire la clé privée (Sk) transmise ;
            II- Création d'une transaction blockchain par le module de transaction de l'application ou du serveur d'application du destinataire à l'adresse blockchain de l'application ou du serveur d'application du destinataire, ladite transaction blockchain comprenant l'adresse IP de l'application ou du serveur d'application du destinataire ;
            III- Envoi par le second module émetteur de la passerelle sur le réseau radio vers un nœud communicant avec au moins un objet connecté (D), de la clé publique éphémère (ePk) mémorisée dans au moins un média lisible par la machine de la passerelle;
            IV- Réception par le module récepteur du nœud de la clé publique éphémère (ePk) envoyée par le second module émetteur de la passerelle;
            V- Génération par le module générateur du nœud, d'un message (m) en réponse à des données provenant d'un objet connecté (D),
               Chiffrement du message (m) par le sous-module de chiffrement du module générateur (N5), au moyen de la clé publique éphémère (ePk), pour obtenir le message chiffré (Em),
               Réalisation d'une signature par le sous-module de chiffrement, la signature (Sig) étant le chiffrement, d'un hashage du message chiffré et de la clé publique éphémère reçue de la passerelle, au moyen de la clé privée (Sk) contenue dans l'espace de mémoire du nœud,
            VI- Envoi de la signature, du message chiffré de l'adresse blockchain du destinataire par le sous-module émetteur du module générateur (N5) du nœud à la passerelle par le réseau radio ;
            VII- Réception des données par le troisième module récepteur de la passerelle et recherche par le sous-modèle de recherche du troisième module récepteur de la passerelle d'une adresse blockchain de l'application ou du serveur d'application d'un destinataire (@R) liée à une transaction de blockchain créée par l'application ou du serveur d'application du destinataire (@R) comprenant une adresse IP de l'application ou du serveur d'application du destinataire et récupère ladite adresse IP,
            VIII- Envoi par le sous-module émetteur du troisième module de la passerelle par protocole IP à l'adresse IP de l'application ou du serveur d'application du destinataire d'au moins : le message chiffré, la signature, la clé publique éphémère et l'adresse blockchain de la passerelle ;
            IX- Réception par le module récepteur de l'application ou un serveur d'application du destinataire, par protocole IP des données de la passerelle comprenant le message chiffré, la signature et la clé publique éphémère, et lors de la réception desdites données, lancement d'un sous-module de vérification de la signature, et vérification au moyen d'un calcul de signature au moyen de la clé privée (Sk) enregistrée dans l'espace de mémoire en comparant le résultat du calcul avec la signature reçue que la signature reçue a bien été généré par le nœud communicant avec au moins avec l'objet connecté, la transaction étant stoppée par le module si la vérification échoue ;
            X- Création d'une transaction blockchain à l'adresse blockchain du destinataire par le module de transaction de l'application ou un serveur d'application du destinataire, optionnellement le premier module de transaction, une fois que le sous-module de vérification a effectué la vérification du message, la transaction comprenant au moins un script spécifique, utilisant la clé publique éphémère (ePk);
            XI- Recherche d'une transaction de la transaction blockchain (8) créée par le destinataire dans la base de donnée mémorisant les transactions blockchain et qui comporte ou résulte d'un script spécifique à clé publique éphémère (ePk) par le sous-module de recherche du quatrième module de gestion de blockchain de la passerelle, une fois l'envoi des données lors de l'étape VIII effectué, puis, une fois ladite transaction blockchain créée par le destinataire trouvée, création d'une nouvelle transaction de blockchain par le sous module de création de transaction du quatrième module de gestion de blockchain de la passerelle en utilisant comme entrées les sorties de la transaction précédente, et utilisant un script incorporant la clé privée éphémère (eSk).
            XII- Recherche dans la blockchain par le sous-module de recherche de l'application ou du serveur d'application du destinataire de la transaction créée par la passerelle, récupération de la clé privée éphémère (eSk) et, optionnellement, enregistrement de ladite clé privée éphémère (eSk) ) par le sous-module de lecture/écriture dans le média lisible par la machine de l'application ou du serveur d'application du destinataire.
            XIII- Le sous-module de déchiffrement de l'application ou un serveur d'application du destinataire déchiffre le message (Em) au moyen de la clé privée éphémère (eSk) récupérée par le sous-module de recherche.

La méthode de communication selon l'invention a pour avantage de permettre un transfert d'un message d'un nœud à un destinataire, dans un réseau distribué, par l'intermédiaire d'une passerelle qui ne partage pas le même propriétaire avec le destinataire et/ou le nœud, tout en garantissant la sécurité et la confidentialité du message, la clé privée éphémère n'étant connue que de la passerelle et du nœud acteurs de la communication, l'utilisation des caractéristiques de la blockchain permettant d'augmenter la sécurité de la communication.

Selon un mode de réalisation particulier de l'invention, l'étape XI de la méthode comprend en outre une vérification par le sous-module de recherche du quatrième module de gestion de blockchain de la passerelle que ladite transaction contient une valeur financière, et optionnellement une mesure de ladite valeur financière, la transaction étant stoppée par le sous-module si la vérification échoue ou si la valeur financière contenue dans la transaction est inférieure à une valeur préalablement négociée entre la passerelle et le nœud.

Cela incite les destinataires à proposer une valeur financière, la valeur devant de plus être suffisante, et incite les passerelles à proposer leurs services pour le transfert de données en échange d'une récompense.

Selon un mode de réalisation particulier de l'invention, l'étape V comprend en outre un premier chiffrement du message (m) est réalisé par le sous-module de chiffrement du module générateur (N5) du nœud au moyen d'une clé symétrique (K) partagée avec une application ou un serveur d'application du destinataire pour obtenir le message chiffré Ek(m), avant que le chiffrement au moyen de la clé publique éphémère (ePk) ne soit réalisé, pour obtenir le message double chiffré (Em), Le déchiffrement du message double chiffré (Em) par le sous-module de déchiffrement de l'application ou un serveur d'application du destinataire à l'étape XIII est alors réalisé au moyen de la clé privée éphémère (eSk) puis de la clé symétrique (K).

Ainsi, le message ne peut être déchiffré complètement que par une clé (K) connue seulement du nœud et du destinataire. Le message est alors chiffré avec cette clé sur le nœud et déchiffré du côté du destinataire. Cette étape est nécessaire si la confidentialité des données est requise. La passerelle ne disposant pas de la clé ne pourra pas déchiffrer le message, la confidentialité lors de l'échange avec une entité étrangère, telle qu'une passerelle qui ne partage pas le même propriétaire que le nœud et le destinataire, est conservé.

Dans un mode de réalisation particulier non limitatif, le script de vérification utilisé à l'étape X comprend une vérification de la clé privée éphémère (eSk) donnée par la passerelle est celle qui correspond à la clé publique éphémère (ePk) de la transaction et un déverrouillage de la transaction au bout d'un certain temps.

Cette méthode de communication permet de garantir les propriétés suivantes :
- L'intégrité des données
- L'authenticité des données
- Le paiement correct de la passerelle si le destinataire reçoit les données
- La réception des données par le destinataire en cas de paiement

De plus, si le si le message (m) est double chiffré, au moyen de la clé symétrique (K) la confidentialité des données est assurée.

Ce protocole d'échange nécessite un type de transaction spécifique pour résister aux attaques. Étant donné que les fonds contenus à l'étape X sont verrouillés jusqu'à ce que la clé privée correcte soit donnée, il peut être nécessaire que la transaction soit également verrouillée dans le temps. Il est ainsi possible de verrouiller les fonds d'une transaction pour un nombre donné de blocs. Le destinataire peut ensuite spécifier que les fonds sont verrouillés jusqu'à ce que 1) la clé privée associée soit révélée ou 2) un laps de temps donné soit écoulé.

Le système de validation de la blockchain peut être la preuve de travail, la preuve d'enjeu, ou tout autre système de validation d'une base de données blockchain.

### BREVE DESCRIPTION DES FIGURES

D'autres particularités et avantages de la présente invention apparaîtront plus clairement à la lecture de la description ci-après, faite en référence aux dessins annexés, dans lesquels :
[Fig 1]

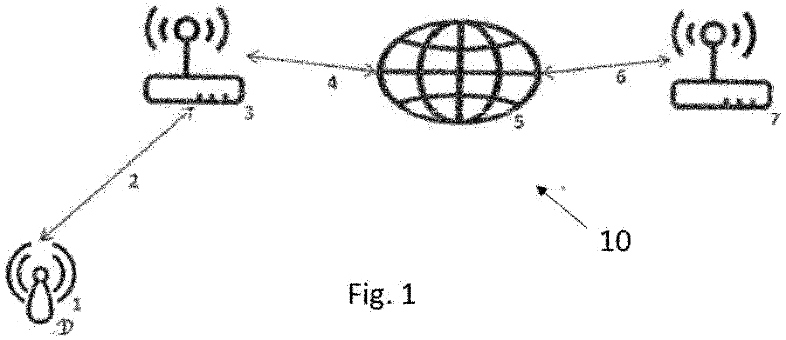

   - la figure 1 représente une vue schématique simplifiée du système de communication, entre une passerelle, un destinataire et un nœud d'un objet connecté, en passant par le réseau radio, symbolisé par des flèches, et le réseau terrestre (Internet), symbolisé par le symbole 5.
[Fig 2]

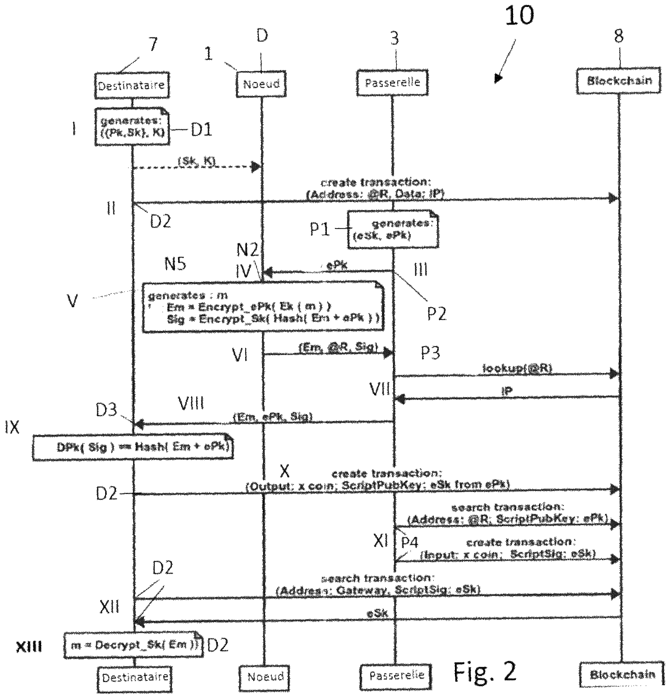

   - la figure 2 est une vue schématique simplifiée représentant les différentes étapes de la méthode de communication (séquence des différents échanges)

Les systèmes représentés sur certaines des figures peuvent être fournis dans diverses configurations. Dans certains modes de réalisation, les systèmes peuvent être configurés en tant que système distribué dans lequel un ou plusieurs composants du système sont répartis sur un ou plusieurs réseaux dans un système de « cloud computing » ou informatique en nuage.

### DESCRIPTION DETAILLEE DE DIFFERENTS MODES DE REALISATION DE L'INVENTION

Dans la description suivante, à des fins d'explication, des détails spécifiques sont présentés afin de permettre une compréhension approfondie des modes de réalisation de l'invention. Cependant, il sera évident que divers modes de réalisation peuvent être mis en pratique sans ces détails spécifiques. Les figures et la description ne sont pas censées être restrictives.

Des détails spécifiques sont donnés dans la description suivante pour permettre une compréhension approfondie des modes de réalisation. Cependant, l'homme du métier comprendra que les modes de réalisation peuvent être mis en pratique sans ces détails spécifiques. Par exemple, des circuits, des systèmes, des réseaux, des processus et d'autres composants peuvent être représentés sous forme de composants sous forme de diagramme afin de ne pas obscurcir les modes de réalisation de manière inutile. Dans d'autres cas, des circuits, des processus, des algorithmes, des structures et des techniques bien connus peuvent être représentés sans détails inutiles afin d'éviter l'obscurcissement des modes de réalisation.

Dans un mode de réalisation particulier de l'invention, dont un exemple simplifié est illustré à la figure 1, un objet connecté (D) peut communiquer avec un destinataire (7) par l'intermédiaire d'une passerelle étrangère (3). Ainsi, la passerelle (3) permet de faire transiter un message (m) d'un nœud (1) à une application ou à un serveur d'application d'un destinataire (7), la passerelle 3 agissant comme relais entre le nœud (1) et le destinataire (7), en communiquant avec eux respectivement par réseau radio, par liaison sans fil (2), préférentiellement par le réseau LoRaWAN, et par réseau Internet avec une liaison IP (6).

En d'autres termes, le capteur d'un objet connecté (D) directement lié à un nœud (1) génère des données qu'il doit envoyer à un destinataire (7). Le nœud (1) n'est pas à portée radio du destinataire (7). Pour envoyer ses données, il va utiliser un intermédiaire, une passerelle (3) par liaison sans fil, ou liaison radio (2). La passerelle (3) est reliée par liaison IP (4) au réseau Internet (5), tout comme le destinataire (7) qui est lui aussi relié par liaison IP (6) au réseau Internet (5). La base de données blockchain n'est ici pas représentée ici et est accessible par la passerelle (3) et le destinataire (7) par liaison IP.

On comprend que l'objet connecté est associé à un capteur, une sonde ou tout autre moyen technique configuré pour générer des données à transmettre à un destinataire.

Le réseau de télécommunication selon l'invention est distribué et fiable, tout en garantissant une utilisation non abusive du réseau, par l'utilisation des caractéristiques de la blockchain.

Ce but est atteint par une architecture particulière basée sur le réseau LoRaWAN. Ce réseau est caractérisé en ce qu'il repose au contraire sur les utilisateurs eux-mêmes pour fonctionner, et la confiance et le bon usage du réseau sont assurés grâce à une blockchain.

Dans le réseau selon l'invention, que l'on pourrait appeler BcWAN (Blockchain Wide Area Network), chaque utilisateur peut décider de déployer une ou plusieurs passerelle(s) qui permettent à des objets de cet utilisateur ou d'autres utilisateurs de transmettre des données sur Internet.

Par exemple, une personne a déployé une passerelle dans sa maison reliée à sa box internet. Il a aussi installé un collier autour du cou de son chien muni d'un GPS et d'une connexion au réseau BcWAN. Lorsque le chien est à proximité de la maison de son maitre, la position est envoyée directement à la passerelle BcWAN par radio. Si le chien s'échappe et sort de la portée de communication de la passerelle de son maitre, la position du chien peut être relayée grâce à la passerelle d'un autre utilisateur. Par exemple, lors de la détection du nœud du collier par ladite passerelle d'un autre utilisateur, celle-ci générera une paire de clés éphémères privée et publique uniques et enverra la clé éphémère publique au nœud du collier pour lui permettre de débuter le transfert de données par le réseau BcWAN quand il le désire.

Tout comme le réseau LoRaWan, le réseau selon l'invention peut être utilisé dans la gestion d'outils pour le suivi et la surveillance (aéroports, parkings, sites de constructions, entrepôts, commerces de détails), d'optimisation de la gestion de l'énergie, de l'aménagement du territoire, du suivi de palettes, de conteneurs de transport ; des villes « intelligentes » avec des compteurs intelligents, détecteurs pour parkings, le contrôle de l'éclairage urbain, la gestion des déchets ; ou des bâtiments et maisons « intelligents » qui peuvent détecter des fuites d'eau, contrôler des pièges à rongeur ou à termites, et tous les capteurs intelligents domestiques.

Le réseau selon l'invention est une plateforme décentralisée qui permet à différentes parties d'accéder à leurs nœuds et de collecter des données à travers des passerelles étrangères (dont les parties ne sont pas propriétaires), tout en maintenant les standards de confidentialité et de sécurité.

A la place d'un seul acteur du déploiement du réseau, une architecture basée sur une blockchain gère l'accès au contrôle du réseau, et permet aux passerelles de communiquer directement à travers un réseau pair-à-pair. Un nœud appartenant à un destinataire peut envoyer des données au destinataire en passant par une passerelle étrangère alors que :
- La passerelle et le destinataire peuvent ne pas se faire confiance,
- La confidentialité des données doit être assurée,
- Les passerelles ne devraient pas être capables de recevoir plus de données que ce qui est nécessaire à la participation dans le réseau
- et la passerelle peut être récompensée pour le transfert de données effectué.

On entend par mémoire tous types de "support de stockage/média lisible par machine". On entend par "support de stockage/média lisible par machine" ou "support de stockage/média lisible par ordinateur", sans toutefois s'y limiter, les dispositifs de stockage portables ou non portables, les dispositifs de stockage optique et divers autres supports capables de stocker, de contenir ou de supporter des instructions et / ou données, et tout support qui participe à la fourniture d'instructions à un processeur pour leur exécution. Un support lisible par machine peut inclure un support non transitoire dans lequel des données peuvent être stockées et qui n'inclut pas les ondes porteuses et / ou les signaux électroniques transitoires se propageant sans fil ou par des connexions filaires. Les supports non volatiles comprennent, par exemple, les disques optiques, magnétiques ou les mémoires mortes. Les supports volatiles incluent la mémoire dynamique, y compris la mémoire cache. Les supports de transmission comprennent les câbles coaxiaux, les fils de cuivre et les fibres optiques. Les formes courantes de supports lisibles par ordinateur incluent, par exemple, sans toutefois s'y limiter, une disquette, un disque flexible, un disque dur, une bande magnétique, tout autre support magnétique, un CD-ROM, un DVD, tout autre support optique, des cartes perforées, une autre support physique avec des motifs de trous, une RAM, une PROM et une EPROM, une FLASH-EPROM, toute autre puce de mémoire ou cartouche, une onde porteuse, ou tout autre support à partir duquel un ordinateur peut lire. Diverses formes de supports lisibles par ordinateur peuvent être impliquées dans le support d'une ou plusieurs séquences d'une ou plusieurs instructions vers un processeur pour leur exécution.

Un produit programme d'ordinateur peut inclure un code et / ou des instructions exécutables par une machine pouvant représenter une procédure, une fonction, un sous-programme, un programme, une routine, un sous-programme, un module, un logiciel, une classe ou toute combinaison de instructions, structures de données ou instructions de programme. Un segment de code peut être couplé à un autre segment de code ou à un circuit matériel en transmettant et / ou en recevant des informations, des données, des arguments, des paramètres ou des contenus de mémoire. Des informations, arguments, paramètres, données, etc. peuvent être transmis, transmis ou transmis par tout moyen approprié, notamment le partage de mémoire, la transmission de messages, la transmission de jetons, la transmission réseau, etc.

Plusieurs unités fonctionnelles décrites dans la présente description ont été nommées modules, afin de souligner leur indépendance d'exécution. Par exemple, un module peut être mis en œuvre par circuit électronique, tel qu'un circuit intégré par exemple ou par d'autre types d'arrangement de composants, tels que par exemple des semi-conducteurs, des portes logiques, des transistors ou d'autres composants discrets. De tels modules peuvent également être mis en œuvre par une ou plusieurs application(s) logicielle(s) ou portion(s) de code exécutable(s) au sein d'au moins un environnement logiciel, pour l'exécution par de divers types de processeurs et ce, quel que soit le langage utilisé. Un module identifié de code exécutable peut, par exemple, comporter un ou plusieurs blocs physiques ou logiques d'instructions machine qui peuvent, par exemple, être organisés en objet, procédé, ou fonction. De plus, les routines et instructions d'un module identifié n'ont pas besoin d'être physiquement localisés ensemble, mais peuvent comporter des instructions disparates stockées dans différents endroits qui, une fois réunis fonctionnellement et logiquement ensemble, forment le module et réalisent le but indiqué pour le module.

En effet, un module peut être une instruction simple de code exécutable, ou une pluralité d'instructions, et peut même être distribué parmi plusieurs différents segments de code ou parmi différents programmes et stocké dans plusieurs blocs de mémoires. De même, des données opérationnelles peuvent être identifiées et illustrées dans des modules, et peuvent être incorporées sous n'importe quelle forme appropriée et être organisées dans n'importe quel type approprié de structure de données. Les données opérationnelles peuvent être rassemblées ou peuvent être réparties sur différents endroits incluant différents dispositifs de stockage finis, et peuvent exister, au moins partiellement, simplement en tant que signaux électroniques sur un système ou un réseau. Différents modules peuvent ainsi composer des modules regroupés, voire un unique module.

En outre, des modes de réalisation peuvent être mis en œuvre par matériel, logiciel, micrologiciel, middleware, microcode, langages de description de matériel, ou toute combinaison de ceux-ci. Lorsqu'il est mis en œuvre dans un logiciel, un micrologiciel, un middleware ou un microcode, le code de programme ou les segments de code pour effectuer les tâches nécessaires (par exemple, un produit de programme d'ordinateur) peuvent être stockés sur un support lisible par machine. Un processeur peut effectuer les tâches nécessaires.

On entend par « composant hardware » tout composant matériel et toute association de composants électroniques permettant la réalisation d'une tâche, tels qu'un ou plusieurs dispositifs, processeurs ou dispositifs de traitement qui peuvent être configurés pour exécuter la ou les fonction(s) de chacun des éléments et modules de l'arrangement structurel décrit ici. Par exemple, le ou les dispositifs, processeurs ou dispositifs de traitement peuvent être configurés pour exécuter une ou plusieurs séquences d'une ou plusieurs instructions exécutables par la machine contenues dans une mémoire principale afin de mettre en œuvre le ou les procédés ou la ou les fonctions décrits dans la présente demande. L'exécution des séquences d'instructions contenues dans une mémoire principale amène les processeurs à exécuter au moins certaines des étapes du processus ou des fonctions des éléments décrits ici. Un ou plusieurs processeurs dans un arrangement multi-processeurs peuvent également être utilisés pour exécuter les séquences d'instructions contenues dans une mémoire principale ou un ordinateur lisible en mémoire. Dans des variantes de modes de réalisation, des circuits câblés peuvent être utilisés à la place ou en combinaison avec des instructions logicielles. Ainsi, les modes de réalisation ne sont limités à aucune combinaison spécifique de circuits matériels et logiciels.

On entend par « blockchain » une technologie de stockage et de transmission d'informations, transparente, sécurisée, fonctionnant sans organe central de contrôle. Par extension, une blockchain constitue une base de données qui contient l'historique de tous les échanges effectués entre ses utilisateurs depuis sa création. Cette base de données est sécurisée et distribuée : elle est partagée par ses différents utilisateurs, sans intermédiaire, ce qui permet à chacun de vérifier la validité de la chaîne.

Chaque transaction Blockchain possède des entrées et des sorties, il s'agit du vecteur d'échange de la crypto-monnaie. Pour que la sortie d'une transaction puisse être « dépensée » elle est ajoutée en entrée d'une transaction. La nouvelle transaction doit valider le script lié à la précédente transaction. Le script est une série d'instruction qui permet d'avoir un contrôle sur l'utilisation des sorties de la transaction. Le script de base de la Blockchain Bitcoin est appelé pay-to-pubkey-hash. Il permet de contrôler qui sera le bénéficiaire des sorties.

On entend par une « adresse blockchain » un unique identifiant permettant de désigner la destination d'une transaction, à laquelle l'entité à qui appartient l'adresse blockchain va créer une transaction blockchain. Cette transaction sera ainsi retrouvée dans la base de données blockchain grâce à cet identifiant.

Le but de BcWAN est de créer une infrastructure LoRaWAN partagée permettant à différentes parties de déployer et d'utiliser le réseau sans faire appel à un seul opérateur de réseau et sans avoir à déployer l'ensemble du réseau. L'idée de BcWAN est qu'elle ne repose pas sur une tierce partie de confiance qui peut être difficile à définir dans une telle situation. En effet, BcWAN ne nécessite aucun serveur centralisé, ni aucun tiers de confiance, sauf si on considère une blockchain comme un tiers de confiance. Afin de prévenir les abus sur le réseau, BcWAN s'appuie sur des crypto-devises et des micro-transactions.

On entend par « réseau WAN » un réseau étendu, qui comporte au moins une partie de transmission/liaison filaire, mais qui peut comprendre aussi une partie de transmission/liaison sans fil.

Le réseau radio (liaison sans fil) par lequel communique le nœud ou objet et la passerelle est un réseau de distance modérée, dont le flux de données est en général plus limité que le réseau longue distance comme le réseau Internet.

On entend par réseau longue distance, un réseau filaire et/ou sans fil, qui permet de transférer des données sur une grande distance, par exemple le réseau Internet. On comprend que les envois réalisés par Internet peuvent par exemple utiliser les protocoles TCP/IP ou UDP/IP.

On entend par « nœud ou objet » un dispositif pour communiquer qui peut être le nœud d'un objet intelligent, ou l'objet lui-même pouvant communiquer. On comprend ainsi que lorsque l'on parle de nœud et à moins que le contraire soit clairement exprimé, on entend nœud ou objet.

Cette architecture peut comprendre une récompense financière en échange de la livraison d'un message. Ainsi, chaque fois qu'un acteur du réseau envoie un message via l'un de ses nœuds, il doit payer pour la livraison du message. Lorsqu'un acteur transfère un message via l'une de ses passerelles, il reçoit quelques crypto-devises en guise de récompense pour le traitement du message.

L'invention propose ainsi une architecture basée sur le réseau LoRa permettant la transmission de données par l'intermédiaire de tiers sans avoir besoin d'un tiers de confiance. Ceci est particulièrement intéressant car il permet aux parties partageant le même objectif de déployer un réseau commun de manière sécurisée et équitable tout en respectant les normes de sécurité. Les règles sont appliquées via une blockchain afin que les parties puissent échanger équitablement au sein du réseau fédéré. Les parties qui ne participent pas au réseau ne peuvent pas tirer profit des biens échangés dans le réseau.

L'invention propose aussi un nouveau moyen pour les parties d'échanger des données en toute sécurité dans un environnement potentiellement malveillant sans avoir besoin d'un tiers de confiance.

Un tel échange repose sur le principe d'« échange juste » entre l'acteur qui envoie les données à payer au transmetteur, en général une passerelle, et le transmetteur qui souhaite recevoir la crypto-monnaie en échange de l'envoi des données. Ce principe doit être respecté pour que l'échange fonctionne.

L'invention répond à cette problématique en garantissant que le paiement soit effectué si et seulement si les données sont envoyées au destinataire par la passerelle, en utilisant les fonctionnalités fournies par les scripts Blockchain, également appelés contrats intelligents.

Un premier aspect de l'invention concerne ainsi une passerelle (3) pour communiquer par réseau radio (2) avec au moins un nœud ou objet (1) et par un réseau filaire (4,6) avec au moins une application ou au moins un serveur d'application d'un destinataire (7) et un dispositif de stockage de données constituant au moins une base de données blockchain (8) mémorisant des transactions blockchain, la passerelle (3) étant caractérisé en ce qu'elle comprend plusieurs modules de codes exécutables sur un ou plusieurs composants hardware de traitement tels qu'un microprocesseur pour constituer une machine, les modules étant mémorisés dans au moins un média lisible par la machine, dont au moins :
Un second module émetteur (P2) qui par l'exécution d'au moins un code sur un composant hardware envoie sur le réseau radio vers un nœud (1) communicant avec au moins un objet connecté (D), des données mémorisées dans au moins un média lisible par la machine de la passerelle, les données comprenant au moins une clé publique éphémère (ePk) complémentaire d'une clé éphémère privée (eSk),
Un troisième module récepteur (P3) qui comprend une pluralité de codes exécutés sur un composant hardware, pour recevoir des données d'un nœud ou objet (1) du réseau radio (2), les données comprenant :
   - une signature (Sig),
   - un message chiffré (Em),
   - et une adresse blockchain de l'application ou du serveur d'application d'un destinataire (@R) liée à une transaction de blockchain créée par l'application ou du serveur d'application du destinataire (7) comprenant une adresse IP de l'application ou du serveur d'application du destinataire (7),

le troisième module (P3) comprend un sous-modèle de recherche qui, par l'exécution de codes sur un composant hardware, recherche une transaction à l'adresse blockchain de l'application ou du serveur d'application du destinataire (@R) et récupère ladite adresse IP de l'application ou du serveur d'application du destinataire (7) contenue dans la transaction, et un sous-module émetteur (6) qui, par l'exécution de codes sur un composant hardware, déclenche l'envoi par protocole IP (4) à l'adresse IP de l'application ou du serveur d'application du destinataire (7) d'au moins :
   - le message chiffré (Em),
   - la signature (Sig),
   - la clé publique éphémère (ePk), et
   - l'adresse blockchain de la passerelle (3),
Un quatrième module de gestion de blockchain (P4) comprenant :
   - au moins un sous-module de recherche qui, par l'exécution de codes sur un composant hardware, recherche une transaction ou des données de la transaction blockchain (8) créée par le destinataire (7) dans la base de données (8) mémorisant les transactions blockchain et qui comporte ou résulte d'un script spécifique à clé publique éphémère (ePk), ladite recherche débutant lorsque l'envoi du message chiffré, de la clé publique éphémère et de la signature au destinataire (7) est effectué, et ;
   - un sous-module de création de transaction qui, par l'exécution de codes sur un composant hardware, crée une nouvelle transaction de blockchain à destination de la passerelle (3) elle-même utilisant un script incorporant la clé privée éphémère (eSk) permettant de valider le script de la transaction blockchain (8) créée par le destinataire (7), ladite nouvelle transaction une fois validée comporte la clé (eSk) pour permettre de déchiffrer le message chiffré (Em), ladite création débutant lorsque lorsque ladite transaction blockchain créée par le destinataire a été trouvée.

Selon un mode de réalisation non limitatif et combinable avec d'autres modes de réalisation, l'évènement déclencheur de la génération et/ou l'envoi des clés privée et publique éphémères (eSk, ePk) par un premier module générateur (P1) de la passerelle et/ou le second module émetteur (P2) de la passerelle (3) peut être au moins un événement choisi dans la liste suivante :
- la réception par la technologie sans fil (2) d'une demande de la clé publique éphémère (ePk) de la part d'au moins un nœud (1) communicant avec au moins un objet connecté (D),
- l'émission périodique, par un module d'émission de la passerelle, optionnellement le second module de la passerelle (3), d'un message de signalisation contenant la clé publique éphémère (ePk),
ou une de leurs combinaisons.

Selon un mode de réalisation non limitatif et combinable avec d'autres modes de réalisation, le nœud comprend un module émetteur (N1) qui, par l'exécution de codes sur un composant hardware, envoie une requête d'informations comprenant au moins la clé publique éphémère (ePk), à la passerelle (3).

Selon un autre mode de réalisation non limitatif et combinable avec d'autres modes de réalisation, les clés privée et publique sont déjà générées et enregistrées dans un ou plusieurs médias lisibles respectivement de la passerelle et du nœud, la génération desdites clés par la passerelle n'est alors pas nécessaire, et la passerelle ne comprend alors pas un premier module générateur pour générer lesdites clés.

Selon un autre mode de réalisation non limitatif et combinable avec d'autres modes de réalisation, le quatrième module de gestion de blockchain (P4) comprend en outre un sous-module de vérification qui, par l'exécution de codes associé à un composant hardware, vérifie au moyen de la clé privée éphémère (eSk) que ladite transaction contient une valeur financière, et optionnellement mesure ladite valeur financière, le sous-module de vérification étant en outre configuré pour stopper la transaction si la vérification échoue ou si la valeur financière contenue dans la transaction est inférieure à une valeur préalablement négociée entre la passerelle (3) et le nœud (1) et mémorisée dans un média lisible par la passerelle (3).

Selon un autre aspect de l'invention, la passerelle, peut être utilisée avec un nœud (1) communicant avec au moins un objet connecté (D), ou directement un objet (1), le nœud ou objet (1) comprenant au moins un ou plusieurs modules de codes exécutables sur un ou plusieurs composants hardware de traitement tels qu'un microprocesseur pour constituer une machine, les modules étant mémorisés dans au moins un média lisible par la machine, et au moins :
Un média lisible par la machine constituant un espace de mémoire comprenant une clé privée (Sk) et une adresse blockchain du destinataire (@R) transmise par une application ou un serveur d'application du destinataire (7) au nœud (1) ;
Un module récepteur (N2) qui, par l'exécution de codes sur un composant hardware, reçoit la clé publique éphémère (ePk) envoyée par la passerelle (3) et envoyée ;
Un module générateur (N5) qui, par l'exécution de codes sur un composant hardware, génère un message (m) en réponse à des données provenant d'un objet connecté (D),

ledit module comprenant un sous-module de chiffrement qui, au moyen de la clé publique éphémère (ePk) envoyée par la passerelle (3), chiffre ce message pour obtenir le message chiffré (Em),
le sous-module de chiffrement réalisant en outre une signature, la signature (Sig) étant le chiffrement, d'un hashage du message chiffré et de la clé publique éphémère (ePk) reçue de la passerelle, au moyen de la clé privée (Sk) contenue dans l'espace de mémoire du nœud (1),
le module générateur (N5) comprenant aussi un sous-module émetteur qui envoie la signature (Sig), le message chiffré (Em) et l'adresse blockchain (@R) du destinataire à la passerelle (3) par le réseau radio (2).

Dans un mode de réalisation, certains modules utilisés par le nœud et/ou la passerelle peuvent étre répartis dans le réseau, comme par exemple le média lisible.

Selon un mode de réalisation,
le sous-module de chiffrement chiffre une première fois le message (m) généré par le module générateur (N5) au moyen d'une clé symétrique (K) partagée avec une application ou un serveur d'application du destinataire (7) pour obtenir le message chiffré Ek(m) avant que le sous-module de chiffrement chiffre le message au moyen de la clé publique éphémère (ePk) envoyée par la passerelle (3), pour obtenir le message double chiffré (Em).

Selon un mode de réalisation, la passerelle (3) est utilisée, avec
le nœud (1) d'un objet connecté,
et une application ou un serveur d'application du destinataire (7), l'application ou le serveur comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
   Un module de génération (D1) qui, par l'exécution de codes sur un composant hardware, (13) génère et envoie la clé privée (Sk) et optionnellement la clé symétrique (K) à destination du nœud (1) communicant avec au moins un objet connecté ;
   Un média lisible par la machine constituant un espace de mémoire comprenant une clé publique (Pk) complémentaire de la clé privée (Sk) transmise au nœud (1) ;
   Un premier module de transaction (D2) qui, par l'exécution de codes sur un composant hardware, crée une transaction blockchain à l'adresse blockchain de l'application ou du serveur d'application (@R) du destinataire (7), ladite transaction blockchain comprenant l'adresse IP de l'application ou du serveur d'application du destinataire ;
   Un module récepteur (D3) qui, par l'exécution de codes sur un composant hardware, reçoit de la passerelle (3), par un réseau longue distance, par exemple Internet (4,6), les données comprenant le message chiffré (Em), la signature (Sig) et la clé publique éphémère (ePk) envoyée par la passerelle, et lors de la réception desdites données, lance un sous-module de vérification de la signature (Sig) qui vérifie au moyen d'un calcul de signature au moyen de la clé privée (Sk) enregistrée dans l'espace de mémoire en comparant le résultat du calcul avec la signature (Sig) reçue que la signature (Sig) reçue a bien été généré par le nœud (1) communicant avec au moins avec l'objet connecté (D), le module (D3) stoppant la transaction si cette vérification échoue ;
   Un module de transaction (D4), optionnellement le premier module de transaction (D2), qui, par l'exécution de codes sur un composant hardware, crée une transaction blockchain à l'adresse blockchain du destinataire (@R) une fois que le sous-module de vérification a effectué la vérification du message, la transaction comprenant au moins un script spécifique, utilisant la clé publique éphémère (ePk) envoyée parde la passerelle ;
   Le module de transaction (D4) comprenant un sous-module de recherche (11) qui une fois le message chiffré (Em), la clé publique éphémère (ePk), et la signature (Sig) reçus, ou la transaction créée par le destinataire, recherche une transaction blockchain incorporant l'adresse blockchain de la passerelle et un script de signature utilisant la clé privée éphémère (eSk) ;
   Le module de transaction (D4) comprenant un sous-module de de déchiffrement qui, une fois la transaction blockchain trouvée, utilise la clé privée éphémère (eSk) de ladite transaction pour déchiffrer le message chiffré du nœud reçu de la passerelle par le module récepteur, et préférentiellement en outre au moyen de la clé symétrique (K) partagée avec le nœud,
   Le module de transaction (D4) comprenant optionnellement en outre un sous-module de lecture/écriture et un espace mémoire dans lequel le sous-module de lecture/écriture enregistre des données et qui, une fois la transaction blockchain trouvée, enregistre la clé privée éphémère (eSk) de ladite transaction.

Le nœud (1), l'application ou serveur d'application du destinataire (7), et l'au moins une passerelle, forment un système de communication (10) permettant au moins un transfert d'un message d'un nœud à un destinataire, par l'intermédiaire d'une passerelle qui ne partage pas nécessairement le même propriétaire avec le destinataire et/ou le nœud, tout en garantissant la sécurité et la confidentialité du message, la clé privée éphémère n'étant connue que de la passerelle et du nœud, acteurs tout deux dans la communication.

On comprend que lors d'un envoi de données, par exemple une clé de chiffrement, le nœud et/ou la passerelle sont susceptibles d'envoyer d'autres données en plus des données décrites explicitement. Ainsi, dans un exemple non limitatif, le nœud et/ou la passerelle envoient des données supplémentaires concernant la transaction, son cout, sa réputation.

Selon un mode de réalisation combinable, en plus de l'envoi par la passerelle des données nécessaires à la communication, ladite passerelle peut envoyer d'autres données la concernant ou concernant le transfert de données.

Selon un mode de réalisation, dans le système de communication (10), le module de transaction (D4, D2) du destinataire (7) déverrouille la transaction créée par ledit module (D4, D2) après une certaine durée, si la passerelle (3) n'a pas débloqué la transaction durant cette durée.

Selon un mode de réalisation, dans le système de communication (10), le nœud (1) utilise un chiffrement RSA-512 pour effectuer sa signature des données.

Selon un mode de réalisation, dans le système de communication (10), le quatrième module de gestion de blockchain (P4) de la passerelle (3) comprend un sous-module de mesure du temps associé à une instruction d'attente d'un temps de confirmation après la réception d'une transaction blockchain du destinataire, préférentiellement au moins avant la réception de la transaction nécessitant de fournir la clé secrète éphémère (eSk).

Selon un mode de réalisation, la passerelle (3) comprend en outre un premier module générateur (P1) qui comprend au moins un code exécuté sur un composant hardware, pour générer la clé privée éphémère (eSk) et la clé publique éphémère (ePk) complémentaire de ladite clé éphémère privée (eSk), préférentiellement en réponse à un évènement déclencheur, et mémorise ces clés (ePk, eSk) dans un média lisible par la machine.

Selon un autre mode de réalisation non limitatif et combinable avec d'autres modes de réalisation, l'invention concerne également une méthode de communication comme illustré à titre d'exemple à la figure 2 pour mettre en œuvre les étapes suivantes :
I. Le destinataire (7) génère une clé publique (Pk) et une clé privée (Sk) complémentaire de la clé publique (Pk), ainsi qu'optionnellement une clé symétrique (K). Le destinataire (7) partage la clé privée (Sk) et optionnellement la clé symétrique (K) avec le nœud. Les clés publique (Pk) et privée (Sk) sont à usage unique.
II. Le destinataire (7) crée une transaction blockchain à l'adresse blockchain (@R) de l'application ou du serveur d'application du destinataire (7) contenant l'adresse IP de l'application ou du serveur d'application du destinataire (7).
III. La passerelle (3) génère une clé publique éphémère (ePk) et une clé privée éphémère (eSk) complémentaire de la clé publique éphémère (ePk). Cette paire ne sera utilisée que pour ce message. La passerelle (3) envoie la clé publique éphémère (ePk) au nœud (1) à l'aide du réseau radio au module récepteur (N2) du nœud (1). L'envoi est effectué soit parce que le nœud (1) lui en fait la demande, soit en avance au moment de la découverte par la passerelle (3) du voisinage du nœud (1), soit parce que la passerelle (3) diffuse cette clé dans son entourage régulièrement dans un message de signalisation.
IV. Le module générateur (N5) du nœud génère un message (m) en réponse à des données provenant d'un objet connecté (D), le nœud chiffre le message (Em) à l'aide de la clé publique éphémère (ePk). Le chiffrement peut être simple (seulement chiffré par ePk) ou double (chiffré par K puis ePk). Le nœud signe le résultat du chiffrement (Em) et la clé publique éphémère (ePk) à l'aide de sa propre clé privée (Sk). La signature s'appelle Sig.
V. Le nœud (1) envoie le message crypté (Em), la signature (Sig) et l'adresse du destinataire (@R) à la passerelle à l'aide du réseau radio.
VI. La passerelle (3) trouve l'adresse IP du destinataire dans la chaîne de blocs (blockchain) à l'adresse du destinataire (@R) et l'enregistre.
VII. La passerelle (3) envoie le message crypté (Em), la clé publique éphémère (ePk) et la signature (Sig) au destinataire (7) par son adresse IP à l'aide du réseau Internet (IP).
VIII. Le destinataire (7) vérifie l'authenticité du message grâce à la signature (Sig) grâce à la clé publique (Pk) qu'il possède et qui est complémentaire de la clé privée (Sk) utilisée par le nœud pour la signature.
IX. Le destinataire (7) crée une transaction dans la blockchain avec une sortie donnée (fixe ou négociée avec la passerelle) et un script spécifique. Le script nécessite de fournir la clé privée éphémère (eSk) associée à la clé publique éphémère (ePk) afin de débloquer le montant fourni dans la transaction.
X. La passerelle (3) cherche cette transaction dans la blockchain à l'adresse blockchain (@R) du destinataire.
XI. Une fois la transaction du destinataire (7) trouvée, la passerelle (3) crée une nouvelle transaction en utilisant comme entrée les sorties de la précédente transaction. Dans cette transaction, il fournit la clé privée éphémère (eSk) afin de valider le script de la transaction précédente. La transaction est destinée à la passerelle elle-même.
XII. Le destinataire (7) peut consulter la liste des transactions pour retrouver la transaction de la passerelle (3) et récupérer la clé privée éphémère (eSk) afin de déchiffrer le message (Em) au moyen de la clé privée éphémère (eSk) et optionnellement de la clé symétrique (K).
XIII. Le destinataire (7) déchiffre ledit message (Em).

Dans un mode de réalisation non limitatif de l'invention, un système de communication (10) est composé au moins d'un nœud ou objet (1), d'une passerelle (3) et d'un destinataire (7), ayant des échanges entre eux et par l'intermédiaire d'une blockchain (8) comme illustré à titre d'exemple dans la figure 2. Ce système de communication (10) comprend ainsi le nœud (1), la passerelle (3) et le destinataire (7), ayant des caractéristiques propres dont la liste est décrite supra, les caractéristiques de chaque mode de réalisation étant combinables entre elles.

Dans un mode de réalisation, garantissant la confidentialité des données, le nœud (1) et le destinataire (7) partagent une clé symétrique (K). Le message (m) peut être chiffré avec cette clé symétrique (K) sur le nœud (1) et déchiffré du côté du destinataire (7). Cette étape est nécessaire si la confidentialité des données est requise.

Dans un autre mode de réalisation, garantissant l'intégrité et principalement l'authenticité des données, le nœud (1) signe également le message (éventuellement chiffré) (Em) et la clé publique éphémère (ePk) avec une clé secrète (Ska). Le nœud (1) et le destinataire (7) doivent également partager une clé secrète (Sk) sur le nœud (1) et une clé publique (Pk) sur le destinataire. Une phase où le destinataire (7) et le nœud (1) peuvent communiquer directement entre eux est donc nécessaire pour charger les clés nécessaires sur le nœud (1). Une fois le nœud (1) hors de portée du destinataire (7), il utilisera une passerelle étrangère (3) comme relais, et utilisera les clés secrète (Sk) et symétrique (K) pour communiquer de manière sécurisée et confidentielle avec le destinataire (7)

Dans un mode de réalisation non limitatif, le module de transaction (D4, D2) du destinataire (7) déverrouille la transaction créée par ledit module (D4, D2) après une certaine durée, si la passerelle (3) n'a pas débloqué la transaction durant cette durée. Pour Bitcoin, l'opérateur de script OP_CHECKLOCKTIMEVERIFY a été introduit pour traiter les problèmes verrouillés par le temps. Cet opérateur permet de verrouiller la transaction jusqu'à ce que la clé privée éphémère (eSk) correcte soit donnée ou jusqu'à une certaine durée à partir de laquelle le créateur de la transaction, ici le destinataire (7), peut récupérer le contenu de la transaction, dans le cas où la clé privée éphémère (eSk) n'est pas fournie à temps. L'opérateur de script OP_CHECKRSA512PAIR a aussi été introduit dans le script afin de vérifier que la clé privée éphémère (eSk) donnée par la passerelle est celle qui correspond à la clé publique éphémère (ePk) de la transaction. D'autres opérateurs de scripts ayant la même fonction peuvent substituer lesdits opérateurs ci-dessus indifféremment dans les modes de réalisation exposés dans la présente demande.

Dans un mode de réalisation non limitatif, le script de vérification utilisé à l'étape X comprend une vérification de la clé privée éphémère (eSk) donnée par la passerelle pour s'assurer qu'elle est celle qui correspond à la clé publique éphémère (ePk) de la transaction et un déverrouillage de la transaction au bout d'un certain temps. Cela permet au détenteur de la clé secrète éphémère (eSk) associé à la clé publique éphémère (ePk) indiquée dans la transaction d'utiliser les sorties de ladite transaction. Le script permet aussi au créateur de la transaction de récupérer les sorties après un temps défini. En effet dans le cas où la passerelle est défaillante, les sorties ne sont alors pas abandonnées, mais vont être récupérées par le créateur de la transaction. Cela permet aussi d'inciter la passerelle à révéler la clé secrète eSk rapidement pour s'assurer de ne pas perdre ses gains.

Le script de vérification est le suivant :

| | |
|---|---|
| 1 | <rsaPubKey> |
| 2 | <<rsaPrivKey>> |
| 3 | OP_CHECKRSA512PAIR |
| 4 | OP_IF |
| 5 | <<sig>> <<pubKey>> |
| 6 | OP_DUP |
| 7 | OP_HASH160 |
| 8 | <pubKeyHash> |
| 9 | OP_EQUALVERIFY |
| 10 | OP_ELSE |
| 11 | <block_height+100> |
| 12 | OP_CHECKLOCKTIMEVERIFY |
| 13 | OP_DROP |
| 14 | <<sig>> <<buyerPubKey> |
| 15 | OP_DUP |
| 16 | OP_HASH160 |
| 17 | <buyerPubkeyHash> |
| 18 | OP_EQUALVERIFY |
| 19 | OP_ENDIF |
| 20 | OP_CHECKSIG |

L'exécution du script est détaillée dans les tableaux 1 et 2 selon deux éventualités différentes. Le cas où la clé secrète éphémère (eSk) fournie correspond à la clé publique éphémère (ePk) est décrit dans un exemple illustré par le tableau 1, tandis que le cas où la clé secrète éphémère (eSk) ne correspond pas mais que le temps imparti pour réclamer la transaction est écoulé est décrit dans un exemple illustré par le tableau 2.

La colonne Pile montre l'état de la pile au fur et à mesure de l'exécution du script. La colonne Script montre la partie de script restant à exécuter. Enfin la colonne Description donne une description de l'étape en court.

Les données entre chevrons : <exemple> sont fournies sans la transaction dont la sortie est utilisée. Les données entre double chevrons : <<exemple>> sont fournies dans la transaction qui dépense une sortie de la première transaction.

**[Tableau 1]**

| **Pile** | **Script** | **Description** |
|---|---|---|
| Empty | <rsaPubKey> <<rsaPrivKey>> OP_CHECKRSA512PAIR OP_IF | Les données fournies sont combinées au script. |
| | <<sig>> <<pubKey>> OP_DUP OP_HASH160 <pubKeyHash> | |
| | OP_EQUALVERIFY OP_ELSE <block_height+100> | |
| | OP_CHECKLOCKTIMEVERIFY OP_DROP <<sig>> | |
| | <<buyerPubKey>> OP_DUP OP_HASH160 <buyerPubkeyHash> | |
| | OP_EQUALVERIFY OP_ENDIF OP_CHECKSIG | |
| <rsaPubKey> | OP_CHECKRSA512PAIR OP_IF <sig> <pubKey> OP_DUP | Les constantes sont ajoutées sur la pile. |
| <<rsaPrivKey>> | OP_HASH160 <pubKeyHash> OP_EQUALVERIFY OP_ELSE | |
| | <block_height+100> OP_CHECKLOCKTIMEVERIFY OP_DROP | |
| | <sig> <buyerPubKey> OP_DUP OP_HASH160 | |
| | <buyerPubkeyHash> OP_EQUALVERIFY OP_ENDIF | |
| | OP_CHECKSIG | |
| True | OP_IF <sig> <pubKey> OP_DUP OP_HASH160 <pubKeyHash> | OP_CHECKRSA512PAIR vérifie que la clé privée en haut de la pile est celle qui correspond à la clé publique en 2^{e} élément sur la pile. |
| | OP_EQUALVERIFY OP_ELSE <block_height+100> | |
| | OP_CHECKLOCKTIMEVERIFY OP_DROP <sig> <buyerPubKey> | |
| | OP_DUP OP_HASH160 <buyerPubkeyHash> | |
| | OP_EQUALVERIFY OP_ENDIF OP_CHECKSIG | |
| Empty | <sig> <pubKey> OP_DUP OP_HASH160 <pubKeyHash> | OP_IF vérifie si l'élément en haut de la pile n'est pas *false* le cas échéant la prochaine instruction OP_ELSE ainsi que toutes les instructions suivantes jusqu'à OP_ENDIF incluses sont ignorées. |
| | OP_EQUALVERIFY OP_CHECKSIG | |
| <sig> <pubKey> | OP_DUP OP_HASH160 <pubKeyHash> OP_EQUALVERIFY | Le jeu d'instructions restantes est similaire au *pay-to-pubkey-hash* classique. |
| | OP_CHECKSIG | |

**[Tableau 2]**

| **Pile** | **Script** | **Description** |
|---|---|---|
| Empty | <rsaPubKey> <rsaPrivKey> OP_CHECKRSA512PAIR OP_IF | Les données fournies sont combinées au script. |
| | <sig> <pubKey> OP_DUP OP_HASH160 <pubKeyHash> | |
| | OP_EQUALVERIFY OP_ELSE <block_height+100> | |
| | OP_CHECKLOCKTIMEVERIFY OP_DROP <sig> | |
| | <buyerPubKey> OP_DUP OP_HASH160 <buyerPubkeyHash> | |
| | OP_EQUALVERIFY OP_ENDIF OP_CHECKSIG | |
| <rsaPubKey> <rsaPrivKey> | OP_CHECKRSA512PAIR OP_IF <sig> <pubKey> OP_DUP | Les constantes sont ajoutées sur la pile. |
| | OP_HASH160 <pubKeyHash> OP_EQUALVERIFY OP_ELSE | |
| | <block_height+100> OP_CHECKLOCKTIMEVERIFY OP_DROP | |
| | <sig> <buyerPubKey> OP_DUP OP_HASH160 | |
| | <buyerPubkeyHash> OP_EQUALVERIFY OP_ENDIF | |
| | OP_CHECKSIG | |
| False | OP_IF <sig> <pubKey> OP_DUP OP_HASH160 <pubKeyHash> | OP_CHECKRSA512PAIR vérifie que la clé privée en haut de la pile est celle qui correspond à la clé publique en 2^{e} élément sur la pile. |
| | OP_EQUALVERIFY OP_ELSE <block_height+100> | |
| | OP_CHECKLOCKTIMEVERIFY OP_DROP <sig> | |
| | <buyerPubKey> OP_DUP OP_HASH160 <buyerPubkeyHash> | |
| | OP_EQUALVERIFY OP_ENDIF OP_CHECKSIG | |
| Empty | <block_height+100> OP_CHECKLOCKTIMEVERIFY OP_DROP | OP_IF vérifie si l'élément en haut de la pile est *false* le cas échéant les prochaines instructions jusqu'à OP_ELSE incluse sont ignorées. La prochaine instruction OP_ENDIF sera aussi ignorée. |
| | <sig> <buyerPubKey> OP_DUP OP_HASH160 | |
| | <buyerPubkeyHash> OP_EQUALVERIFY OP_CHECKSIG | |
| <block_height+100> | OP_CHECKLOCKTIMEVERIFY OP_DROP <sig> | La constante est ajoutée sur la pile. |
| | <buyerPubKey> OP_DUP <sig> <buyerPubKey> OP_HASH160 | |
| | <buyerPubkeyHash> OP_EQUALVERIFY OP_CHECKSIG | |
| <block _height+100> | OP_DROP <sig> <buyerPubKey> OP_DUP OP_HASH160 | OP_CHECKLOCKTIMEVERIFY invalide la transaction si le bloc actuel est inférieur à la valeur sur la pile. |
| | <buyerPubkeyHash> OP_EQUALVERIFY OP_CHECKSIG | |
| <block _height+100> | sig> <buyerPubKey> OP_DUP OP_HASH160 | OP_DROP supprime le premier element de la pile. |
| | <buyerPubkeyHash> OP_EQUALVERIFY OP_CHECKSIG | |
| <sig> <buyerPubKey> | OP_DUP OP_HASH160 <buyerPubkeyHash> | Le jeu d'instructions restantes est similaire au *pay-to-pubkey-hash* classique mais à destination du créateur de la transaction initiale. |
| | OP_EQUALVERIFY OP_CHECKSIG | |

De plus, il est noté que des modes de réalisation individuels peuvent être décrits en tant que processus qui est décrit sous la forme d'un organigramme, d'un organigramme de données, d'un schéma de structure ou d'un schéma synoptique. Bien qu'un organigramme puisse décrire les opérations comme un processus séquentiel, de nombreuses opérations peuvent être effectuées en parallèle ou simultanément. De plus, l'ordre des opérations peut être réorganisé. Un processus est terminé lorsque ses opérations sont terminées, mais il est possible que des étapes supplémentaires ne soient pas incluses dans une figure. Un processus peut correspondre à une méthode, une fonction, une procédure, une sous-chaîne, un sous-programme, etc. Lorsqu'un processus correspond à une fonction, sa terminaison peut correspondre à un retour de la fonction à la fonction appelante ou à la fonction principale. C'est notamment le cas des phases de recherche de transaction dans la base de données blockchain.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné. Aussi, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

On comprendra aisément à la lecture de la présente demande que les composants de la présente invention, comme généralement décrits et illustrés dans les figures, peuvent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

### LISTE DES SIGNES DE REFERENCES

(1) Nœud
(2) Liaison sans fil, radio
(3) Passerelle
(4) Liaison filaire (IP)
(5) Internet
(6) Liaison (IP)
(7) Destinataire
(8) Base de données Blockchain
(10) Système de communication
(P1) Premier module générateur (Passerelle)
(P2) Second module émetteur (Passerelle)
(P3) Troisième module récepteur (Passerelle)
(P4) Quatrième module de gestion de blockchain (Passerelle)
(N2) Module récepteur (Nœud)
(N5) Module générateur (Nœud)
(D1) Module de génération (Destinataire)
(D2) Premier module de transaction (Destinataire)
(D3) Module récepteur (Destinataire)
(D4) Deuxième module de transaction

## Revendications

1. Dispositif de communication entre au moins un objet connecté (D) relié par radio (2) soit directement à un nœud (1) soit à au moins une passerelle (3) communiquant par un réseau filaire (4,6) et au moins une application ou au moins un serveur d'application d'au moins un destinataire (7), le dispositif comprenant :
une passerelle (3) comprenant plusieurs modules de codes exécutables sur un ou plusieurs composants hardware de traitement tels qu'un microprocesseur pour constituer une machine, les modules étant mémorisés dans au moins un média lisible par la machine dont au moins :
un second module émetteur ;
un troisième module récepteur qui comprend un sous-module émetteur ;
un quatrième module de gestion de blockchain qui comprend au moins un sous-module de recherche et un sous-module de création de transaction ;
un nœud (1) comprenant au moins un ou plusieurs modules de codes exécutables sur un ou plusieurs composants hardware de traitement tels qu'un microprocesseur pour constituer une machine les modules étant mémorisés dans au moins un média lisible par la machine et au moins :
un média lisible par la machine ; un module récepteur;
un module générateur comprenant un sous-module de chiffrement et un sous- module émetteur ;
une application ou un serveur d'application du destinataire (7) comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
un module de génération ;
un média lisible par la machine ;
un premier module de transaction ;
un module récepteur comprenant un sous-module de vérification ;
un module de transaction, optionnellement le premier module de transaction comprenant un sous-module de recherche, un sous-module de lecture/écriture et un sous-module de déchiffrement ;
les modules effectuant leurs actions par l'exécution de codes sur au moins un composant hardware ;
dans lequel :
I- le module de génération de l'application ou du serveur d'application du destinataire (7), par l'exécution de codes sur un composant hardware, génère une clé publique, Pk, et enregistre sur un média lisible par la machine constituant un espace de mémoire, puis génération et envoi de la clé privée, Sk, complémentaire de la clé publique, Pk, à destination du nœud (1) communicant avec le au moins un objet connecté (D), et enregistrement dans le média lisible du nœud (1) constituant un espace de mémoire la clé privée, Sk, transmise ;
II- le module de transaction de l'application ou du serveur d'application du destinataire (7) crée, par l'exécution de codes sur un composant hardware, à l'adresse blockchain de l'application ou du serveur d'application du destinataire, ladite transaction blockchain comprenant l'adresse IP de l'application ou du serveur d'application du destinataire (7) ;
III- le second module émetteur de la passerelle (3), par l'exécution de codes sur un composant hardware, envoie sur le réseau radio (2) vers le nœud (1) communicant avec le au moins un objet connecté, une dt-W clé publique éphémère, ePk, mémorisée dans au moins un média lisible par la machine de la passerelle ;
IV- le module récepteur du nœud (1) , par l'exécution de codes sur un composant hardware, reçoit la clé publique éphémère, ePk, envoyée par le second module émetteur de la passerelle (3) ;
V- le module générateur du nœud (1), par l'exécution de codes sur un composant hardware, génère un message, m, en réponse à des données provenant du au moins un objet connecté, et le sous-module de chiffrement du module générateur, par l'exécution de codes sur un composant hardware, chiffre le message, m, au moyen de la clé publique éphémère, ePk, pour obtenir le message chiffré, Em, et
par le sous-module de chiffrement, par l'exécution de codes sur un composant hardware, réalise une signature, Sig, qui est le chiffrement, d'un hashage du message chiffré et de la clé publique éphémère, ePk, reçue de la passerelle, au moyen de la clé privée, Sk, contenue dans l'espace de mémoire du nœud (1),
VI- le sous-module émetteur du module générateur du nœud (1), par l'exécution de codes sur un composant hardware, envoie la signature, Sig, du message chiffré, Em, et l'adresse blockchain du destinataire à la passerelle (3) par le réseau radio (2) ;
VII- le troisième module récepteur de la passerelle (3), par l'exécution de codes sur un composant hardware, reçoit les données le sous-modèle de recherche du troisième module récepteur de la passerelle recherche une adresse blockchain de l'application ou du serveur d'application d'un destinataire liée à une transaction de blockchain créée par l'application ou du serveur d'application du destinataire comprenant une adresse IP de l'application ou du serveur d'application du destinataire et récupère ladite adresse IP ;
VIII- le sous-module émetteur du troisième module de la passerelle, par l'exécution de codes sur un composant hardware, envoie par protocole IP à l'adresse IP de l'application ou du serveur d'application du destinataire (7) au moins : le message chiffré, Em, la signature, Sig, la clé publique éphémère, ePk, et l'adresse blockchain de la passerelle (3) ;
IX- le module récepteur de l'application ou du serveur d'application du destinataire, par l'exécution de codes sur un composant hardware, reçoit par protocole IP des données de la passerelle (3) comprenant le message chiffré, Em, la signature, Sig, et la clé publique éphémère, ePk, et lors de la réception desdites données, un sous-module de vérification de la signature, Sig, de l'application ou du serveur d'application du destinataire est lancé qui vérifie au moyen d'un calcul de signature au moyen de la clé privée, Sk, enregistrée dans l'espace de mémoire en comparant le résultat du calcul avec la signature reçue, Sig que la signature reçue, Sig, a bien été généré par le nœud (1) communicant avec au moins avec le au moins un objet connecté, la transaction étant stoppée par le module si la vérification échoue ;
X- le module de transaction de l'application ou du serveur d'application du destinataire, optionnellement le premier module de transaction, par l'exécution de codes sur un composant hardware, crée une transaction blockchain à l'adresse blockchain du destinataire une fois que le sous-module de vérification a effectué la vérification du message, la transaction comprenant au moins un script spécifique, utilisant la clé publique éphémère, ePk ;
XI- par l'exécution de codes sur un composant hardware, recherche d'une transaction de la transaction blockchain (8) créée par le destinataire (7) dans la base de donnée mémorisant les transactions blockchain et qui comporte ou résulte d'un script spécifique à clé publique éphémère, ePk, par le sous- module de recherche du quatrième module de gestion de blockchain de la passerelle une fois l'envoi des données lors de l'étape VIII effectué, puis, une fois ladite transaction blockchain créée par le destinataire (7) trouvée, création d'une nouvelle transaction de blockchain par le sous module de création de transaction du quatrième module de gestion de blockchain de la passerelle en utilisant comme entrées les sorties de la transaction précédente, et utilisant un script incorporant la clé privée éphémère, eSk ;
XII- par le sous-module de recherche de l'application ou du serveur d'application du destinataire par l'exécution de codes sur un composant hardware, recherche dans la blockchain de la transaction créée par la passerelle (3), récupération de la clé privée éphémère, eSk, et, optionnellement, enregistrement de ladite clé privée éphémère, eSk, par le sous-module de lecture/écriture dans le média lisible par la machine de l'application ou du serveur d'application du destinataire (7) ;
XIII- par le sous-module de déchiffrement de l'application ou un serveur d'application du destinataire (7) , par l'exécution de codes sur un composant hardware, déchiffrement du message, Em, au moyen de la clé privée éphémère, eSk, récupérée par le sous-module de recherche.

2. Dispositif selon la revendication 1, où l'évènement déclencheur de la génération et/ou l'envoi des clés privée et publique éphémères, eSk, ePk, par un premier module générateur de la passerelle et/ou le second module émetteur de la passerelle (3) peut être au moins un événement choisi dans la liste suivante :
la réception par la technologie sans fil (2) d'une demande de la clé publique éphémère, ePk, de la part du au moins un nœud (1) communicant avec le au moins un objet connecté (D),
l'émission périodique, par un module d'émission de la passerelle, optionnellement le second module de la passerelle (3), d'un message de signalisation contenant la clé publique éphémère, ePk,
ou une de leurs combinaisons.

3. Dispositif selon la revendication 1 ou 2, où le quatrième module de gestion de blockchain comprend en outre un sous-module de vérification qui, par l'exécution de codes associé à un composant hardware, vérifie au moyen de la clé privée éphémère, eSk, que ladite transaction contient une valeur financière, et optionnellement mesure ladite valeur financière, le sous-module de vérification étant en outre configuré pour stopper la transaction si la vérification échoue ou si la valeur financière contenue dans la transaction est inférieure à une valeur préalablement négociée entre la passerelle (3) et le nœud (1) et mémorisée dans un média lisible par la passerelle (3).

4. Système de communication (10) comprenant un dispositif selon l'une des revendications 1 à 3, et en outre le nœud (1) communicant avec le au moins un objet connecté (D), le noeud (1) comprenant au moins un ou plusieurs modules de codes exécutables sur un ou plusieurs composants hardware de traitement tels qu'un microprocesseur pour constituer une machine, les modules étant mémorisés dans au moins un média lisible par la machine, et au moins :
un média lisible par la machine constituant un espace de mémoire comprenant une clé privée, Sk, et une adresse blockchain du destinataire transmise par une application ou un serveur d'application du destinataire (7) au nœud (1) ;
un module récepteur qui, par l'exécution de codes sur un composant hardware, reçoit la clé publique éphémère, ePk, envoyée par la passerelle (3)
un module générateur qui, par l'exécution de codes sur un composant hardware, génère un message (m) en réponse à des données provenant de objet connecté, ledit module comprenant un sous-module de chiffrement qui, au moyen de la clé publique éphémère, ePk, envoyée par la passerelle (3), chiffre ce message pour obtenir le message chiffré, Em,
le sous-module de chiffrement réalisant en outre une signature, la signature, Sig, étant le chiffrement, d'un hashage du message chiffré et de la clé publique éphémère, ePk, reçue de la passerelle, au moyen de la clé privée, Sk, contenue dans l'espace de mémoire du nœud (1),
le module générateur comprenant aussi un sous-module émetteur qui envoie la signature, Sig, le message chiffré, Em, et l'adresse blockchain du destinataire à la passerelle (3) par le réseau radio (2).

5. Système de communication (10) selon la revendication précédente, où le sous-module de chiffrement chiffre une première fois le message, m, généré par le module générateur au moyen d'une clé symétrique, K, partagée avec l'application ou le serveur d'application du destinataire (7) pour obtenir le message chiffré, Ek(m), avant que le sous-module de chiffrement chiffre le message au moyen de la clé publique éphémère, ePk, envoyée par la passerelle (3), pour obtenir le message doublement chiffré, Em.

6. Système de communication (10) selon la revendication 4 ou 5, comprenant :
l'application ou le serveur d'application du destinataire (7), l'application ou le serveur comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
un module de génération qui, par l'exécution de codes sur un composant hardware, (13) génère et envoie la clé privée, Sk, et optionnellement la clé symétrique, K, à destination du nœud (1) communicant avec le au moins un objet connecté ;
un média lisible par la machine constituant un espace de mémoire comprenant une clé publique, Pk, complémentaire de la clé privée, Sk, transmise au nœud (1) ;
un premier module de transaction qui, par l'exécution de codes sur un composant hardware, crée une transaction blockchain à l'adresse blockchain de l'application ou du serveur d'application du destinataire (7), ladite transaction blockchain comprenant l'adresse IP de l'application ou du serveur d'application du destinataire ;
un module récepteur qui, par l'exécution de codes sur un composant hardware, reçoit de la passerelle (3), par un réseau longue distance, par exemple Internet (4,6), les données comprenant le message chiffré, Em, la signature, Sig, et la clé publique éphémère, ePk, envoyée par la passerelle, et lors de la réception desdites données, lance un sous-module de vérification de la signature, Sig, qui vérifie au moyen d'un calcul de signature au moyen de la clé privée, Sk, enregistrée dans l'espace de mémoire en comparant le résultat du calcul avec la signature, Sig, reçue que la signature, Sig, reçue a bien été généré par le nœud (1) communicant avec le au moins un objet connecté, le module stoppant la transaction si cette vérification échoue ;
un module de transaction, optionnellement le premier module de transaction, qui, par l'exécution de codes sur un composant hardware, crée une transaction blockchain à l'adresse blockchain du destinataire une fois que le sous-module de vérification a effectué la vérification du message, la transaction comprenant au moins un script spécifique, utilisant la clé publique éphémère, ePk envoyée par la passerelle ;
le module de transaction comprenant un sous-module de recherche (11) qui une fois le message chiffré, Em, la clé publique éphémère, ePk, et la signature, Sig reçus, ou la transaction créée par le destinataire, recherche une transaction blockchain incorporant l'adresse blockchain de la passerelle et un script de signature utilisant la clé privée éphémère, eSk ;
le module de transaction comprenant un sous-module de de déchiffrement qui, une fois la transaction blockchain trouvée, utilise la clé privée éphémère, eSk, de ladite transaction pour déchiffrer le message chiffré du nœud reçu de la passerelle par le module récepteur, et préférentiellement en outre au moyen de la clé symétrique, K, partagée avec le nœud,
le module de transaction comprenant optionnellement en outre un sous-module de lecture/écriture et un espace mémoire dans lequel le sous-module de lecture/écriture enregistre des données et qui, une fois la transaction blockchain trouvée, enregistre la clé privée éphémère, eSk, de ladite transaction.

7. Système de communication (10) selon la revendication 5 ou 6, dans lequel le module de transaction du destinataire (7) déverrouille la transaction créée par ledit module après une certaine durée, si la passerelle (3) n'a pas débloqué la transaction durant cette durée.

8. Système de communication (10) selon l'une quelconque des revendications précédentes, dans lequel le nœud (1) utilise un chiffrement RSA-512 pour effectuer sa signature des données.

9. Système de communication (10) selon l'une quelconque des revendications précédentes, dans lequel le quatrième module de gestion de blockchain de la passerelle (3) comprend un sous-module de mesure du temps associé à une instruction d'attente d'un temps de confirmation après la réception d'une transaction blockchain du destinataire (7), préférentiellement au moins avant la réception de la transaction nécessitant de fournir la clé secrète éphémère, eSk.

10. Système (1) selon l'une quelconque des revendications précédentes, où la passerelle (3) comprend en outre un premier module générateur qui comprend au moins un code exécuté sur un composant hardware, pour générer la clé privée éphémère, eSk, et la clé publique éphémère, ePk, complémentaire de ladite clé éphémère privée, eSk, préférentiellement en réponse à un évènement déclencheur, et mémorise ces clés, ePk, eSk, dans un média lisible par la machine.

11. Méthode de communication entre au moins un objet connecté (D) relié par radio (2) soit directement à un nœud (1) soit à au moins une passerelle (3) communiquant par un réseau filaire (4,6) avec au moins une application ou au moins un serveur d'application d'au moins un destinataire (7), la méthode comprenant :
une passerelle (3) comprenant plusieurs modules de codes exécutables sur un ou plusieurs composants hardware de traitement tels qu'un microprocesseur pour constituer une machine, les modules étant mémorisés dans au moins un média lisible par la machine dont au moins :
un second module émetteur ;
un troisième module récepteur qui comprend un sous-module émetteur ;
un quatrième module de gestion de blockchain qui comprend au moins un sous-module de recherche et un sous-module de création de transaction ;
un nœud (1) comprenant au moins un ou plusieurs modules de codes exécutables sur un ou plusieurs composants hardware de traitement tels qu'un microprocesseur pour constituer une machine les modules étant mémorisés dans au moins un média lisible par la machine et au moins :
un média lisible par la machine ;
un module récepteur ;
un module générateur comprenant un sous-module de chiffrement et un sous- module émetteur ;
une application ou un serveur d'application du destinataire (7) comprenant au moins un ou plusieurs modules de codes exécutables sur un ou plusieurs composants hardware de traitement tels qu'un microprocesseur pour constituer une machine, les modules étant mémorisés dans au moins un média lisible par la machine, dont au moins :
un module de génération ;
un média lisible par la machine
un premier module de transaction ;
un module récepteur comprenant un sous-module de vérification
un module de transaction, optionnellement le premier module de transaction comprenant un sous-module de recherche, un sous-module de lecture/écriture et un sous-module de déchiffrement ;
les modules effectuant leurs actions par l'exécution de codes sur au moins un composant hardware ;
et qu'elle comprend au moins les étapes suivantes :
I- génération par le module de génération de l'application ou du serveur d'application du destinataire (7) d'une clé publique, Pk, et enregistrement sur un média lisible par la machine constituant un espace de mémoire, puis génération et envoi de la clé privée, Sk, complémentaire de la clé publique, Pk, à destination du nœud (1) communicant avec le au moins un objet connecté (D), et enregistrement dans le média lisible du nœud (1) constituant un espace de mémoire la clé privée, Sk, transmise ;
II- création d'une transaction blockchain par le module de transaction de l'application ou du serveur d'application du destinataire (7) à l'adresse blockchain de l'application ou du serveur d'application du destinataire, ladite transaction blockchain comprenant l'adresse IP de l'application ou du serveur d'application du destinataire (7);
III- envoi par le second module émetteur de la passerelle (3) sur le réseau radio (2) vers le nœud (1) communicant avec le au moins un objet connecté, d'une clé publique éphémère, ePk, mémorisée dans au moins un média lisible par la machine de la passerelle ;
IV- réception par le module récepteur du nœud (1) de la clé publique éphémère, ePk, envoyée par le second module émetteur de la passerelle (3);
V- génération par le module générateur du nœud (1), d'un message, m, en réponse à des données provenant du au moins un objet connecté, chiffrement du message, m, par le sous-module de chiffrement du module générateur, au moyen de la clé publique éphémère, ePk, pour obtenir le message chiffré, Em,
réalisation d'une signature, Sig, par le sous-module de chiffrement, la signature, Sig, étant le chiffrement, d'un hashage du message chiffré et de la clé publique éphémère, ePk, reçue de la passerelle, au moyen de la clé privée, Sk, contenue dans l'espace de mémoire du nœud (1),
VI- envoi de la signature, Sig, du message chiffré, Em, et de l'adresse blockchain du destinataire par le sous-module émetteur du module générateur du nœud (1) à la passerelle (3) par le réseau radio (2) ;
VII- réception des données par le troisième module récepteur de la passerelle (3) et recherche par le sous-modèle de recherche du troisième module récepteur de la passerelle d'une adresse blockchain de l'application ou du serveur d'application d'un destinataire liée à une transaction de blockchain créée par l'application ou du serveur d'application du destinataire comprenant une adresse IP de l'application ou du serveur d'application du destinataire et récupère ladite adresse IP,
VIII- envoi par le sous-module émetteur du troisième module de la passerelle par protocole IP à l'adresse IP de l'application ou du serveur d'application du destinataire (7) d'au moins : le message chiffré, Em, la signature, Sig, la clé publique éphémère, ePk, et l'adresse blockchain de la passerelle (3) ;
IX- réception par le module récepteur de l'application ou un serveur d'application du destinataire, par protocole IP des données de la passerelle (3) comprenant le message chiffré, Em, la signature, Sig, et la clé publique éphémère, ePk, et lors de la réception desdites données, lancement d'un sous-module de vérification de la signature, Sig, et vérification au moyen d'un calcul de signature au moyen de la clé privée, Sk, enregistrée dans l'espace de mémoire en comparant le résultat du calcul avec la signature reçue, Sig que la signature reçue, Sig, a bien été générée par le nœud (1) communicant avec le au moins un objet connecté, la transaction étant stoppée par le module si la vérification échoue ;
X- création d'une transaction blockchain à l'adresse blockchain du destinataire par le module de transaction de l'application ou un serveur d'application du destinataire, optionnellement le premier module de transaction, une fois que le sous-module de vérification a effectué la vérification du message, la transaction comprenant au moins un script spécifique, utilisant la clé publique éphémère, ePk ;
XI- recherche d'une transaction de la transaction blockchain (8) créée par le destinataire (7) dans la base de donnée mémorisant les transactions blockchain et qui comporte ou résulte d'un script spécifique à clé publique éphémère, ePk, par le sous- module de recherche du quatrième module de gestion de blockchain de la passerelle une fois l'envoi des données lors de l'étape VIII effectué, puis, une fois ladite transaction blockchain créée par le destinataire (7) trouvée, création d'une nouvelle transaction de blockchain par le sous module de création de transaction du quatrième module de gestion de blockchain de la passerelle en utilisant comme entrées les sorties de la transaction précédente, et utilisant un script incorporant la clé privée éphémère, eSk ;
XII- recherche dans la blockchain par le sous-module de recherche de l'application ou du serveur d'application du destinataire de la transaction créée par la passerelle (3), récupération de la clé privée éphémère, eSk, et, optionnellement, enregistrement de ladite clé privée éphémère, eSk, par le sous-module de lecture/écriture dans le média lisible par la machine de l'application ou du serveur d'application du destinataire (7).
XIII- déchiffrement du message, Em, par le sous-module de déchiffrement de l'application ou un serveur d'application du destinataire (7) au moyen de la clé privée éphémère, eSk, récupérée par le sous-module de recherche.

12. Méthode de communication selon la revendication 11 qui comprend en outre dans l'étape XI une vérification par le sous-module de recherche du quatrième module de gestion de blockchain de la passerelle (3) que ladite transaction contient une valeur financière, et préférentiellement une mesure de ladite valeur financière, la transaction étant stoppée par le sous-module si la vérification échoue ou si la valeur financière contenue dans la transaction est inférieure à une valeur préalablement négociée entre la passerelle (3) et le nœud (1).

13. Méthode de communication selon la revendication 11 ou 12, qui comprend en outre lors de l'étape V, un premier chiffrement du message (m) est réalisé par le sous-module de chiffrement du module générateur du nœud (1) au moyen d'une clé symétrique, K, partagée avec une application ou un serveur d'application du destinataire (7) pour obtenir le message chiffré, Ek(m), avant que le chiffrement au moyen de la clé publique éphémère, ePk, ne soit réalisé, pour obtenir le message doublement chiffré, Em, dans lequel le déchiffrement du message doublement chiffré, Em, par le sous- module de déchiffrement de l'application ou un serveur d'application du destinataire (7) à l'étape XIII est alors réalisé au moyen de la clé privée éphémère, eSk, puis de la clé symétrique (K).

14. Méthode de communication selon l'une des revendications 11 à 13, où la passerelle (3) comprend un premier module générateur, la méthode comprenant en outre, avant l'étape III une première étape de génération par chacun des premiers modules générateurs des passerelles d'une clé privée éphémère, eSk1, eSk2, et une clé publique éphémère, ePk1, ePk2, complémentaire de ladite clé privée éphémère, eSk11, eSk2, préférentiellement en réponse à un évènement déclencheur, et mémorisation de ces clés, ePk1, eSk1, ePk2, eSk2, dans le média lisible par la machine de la passerelle.

## Patentansprüche

1. Kommunikationsvorrichtung zwischen mindestens einem verbundenen Objekt (D), das per Funk (2) entweder direkt an einen Knoten (1) oder mindestens an ein Gateway (3) angebunden ist, der/das über ein drahtgebundenes Netzwerk (4, 6) kommuniziert, und mindestens einer Anwendung oder mindestens einem Anwendungsserver von mindestens einem Empfänger (7), wobei die Vorrichtung umfasst:
ein Gateway (3), das mehrere auf einer oder mehreren Verarbeitungs-Hardwarekomponenten wie einem Mikroprozessor ausführbare Codemodule umfasst, um eine Maschine zu bilden, wobei die Module auf mindestens einem maschinenlesbaren Medium gespeichert sind, einschließlich mindestens: ein zweites Sendermodul;
ein drittes Empfängermodul, das ein Sender-Submodul umfasst;
ein viertes Blockchain-Managementmodul, das mindestens ein Recherche-Submodul und ein Transaktionserstellungs-Submodul umfasst;
einen Knoten (1), der mindestens ein oder mehrere auf einer oder mehreren Verarbeitungs-Hardwarekomponenten wie einem Mikroprozessor ausführbare Codemodule umfasst, um eine Maschine zu bilden, wobei die Module in mindestens einem maschinenlesbaren Medium gespeichert sind, und mindestens:
ein maschinenlesbares Medium; ein Empfängermodul;
ein Generierungsmodul, das ein Verschlüsselungs-Submodul und ein Sender-Submodul umfasst;
eine Anwendung oder einen Anwendungsserver des Empfängers (7), die/der mindestens ein oder mehrere Codemodule umfasst, die auf einer oder mehreren Verarbeitungs-Hardwarekomponenten wie einem Mikroprozessor ausführbar sind, um eine Maschine zu bilden, wobei die Module auf mindestens einem maschinenlesbaren Medium gespeichert sind, einschließlich mindestens:
ein Generierungsmodul;
ein maschinenlesbares Medium;
ein erstes Transaktionsmodul;
ein Empfängermodul, das ein Verifizierungs-Submodul umfasst;
ein Transaktionsmodul, wobei optional das erste Transaktionsmodul ein Recherche-Submodul, ein Lese-/Schreib-Submodul und ein Entschlüsselungs-Submodul umfasst;
wobei die Module ihre Aktionen durch die Ausführung von Codes auf mindestens einer Hardwarekomponente durchführen;
wobei:
I- das Anwendungsgenerierungsmodul oder der Anwendungsserver des Empfängers (7) durch die Ausführung von Codes auf einer Hardwarekomponente einen öffentlichen Schlüssel Pk generiert und diesen auf einem maschinenlesbaren Medium aufzeichnet, das einen Speicherbereich bildet, woraufhin der zum öffentlichen Schlüssel Pk komplementäre private Schlüssel Sk generiert und an den Knoten (1) gesendet wird, der mit dem mindestens einem verbundenen Objekt (D) kommuniziert, und der übertragene private Schlüssel Sk auf dem lesbaren Medium des Knotens (1), das einen Speicherbereich bildet, aufgezeichnet wird;
II- das Transaktionsmodul der Anwendung oder des Anwendungsservers des Empfängers (7) durch die Ausführung von Codes auf einer Hardwarekomponente an der Blockchain-Adresse der Anwendung oder des Anwendungsservers des Empfängers diese Blockchain-Transaktion erstellt, die die IP-Adresse der Anwendung oder des Anwendungsservers des Empfängers (7) umfasst;
III- das zweite Sendermodul des Gateways (3) durch die Ausführung von Codes auf einer Hardwarekomponente über das Funknetz (2) an den Knoten (1), der mit dem mindestens einen verbundenen Objekt kommuniziert, einen ephemeren öffentlichen Schlüssel ePk sendet, der auf mindestens einem vom Gateway-Rechner lesbaren Medium gespeichert ist;
IV- das Empfängermodul des Knotens (1) durch die Ausführung von Codes auf einer Hardwarekomponente den vom zweiten Sendermodul des Gateways (3) gesendeten ephemeren öffentlichen Schlüssel ePk empfängt;
V- das Generierungsmodul des Knotens (1) durch Ausführung von Codes auf einer Hardwarekomponente eine Nachricht m als Reaktion auf Daten, die von mindestens einem verbundenen Objekt stammen, generiert, und das Verschlüsselungs-Submodul des Generierungsmoduls durch Ausführung von Codes auf einer Hardwarekomponente die Nachricht m mittels des ephemeren öffentlichen Schlüssels ePk verschlüsselt, um die verschlüsselte Nachricht Em zu erhalten, und
durch das Verschlüsselungs-Submodul, durch die Ausführung von Codes auf einer Hardwarekomponente eine Signatur Sig durchführt, die die Verschlüsselung eines Hashwerts der verschlüsselten Nachricht und des vom Gateway empfangenen ephemeren öffentlichen Schlüssels ePk, mittels des im Speicherbereich des Knotens (1) enthaltenen privaten Schlüssels Sk ist,
VI- das Sender-Submodul des Generierungsmoduls des Knotens (1) durch die Ausführung von Codes auf einer Hardwarekomponente die Signatur Sig der verschlüsselten Nachricht Em und die Blockchain-Adresse des Empfängers über das Funknetz (2) an das Gateway (3) sendet;
VII- das dritte Empfängermodul des Gateways (3) durch die Ausführung von Codes auf einer Hardwarekomponente die Daten empfängt und das Recherche-Submodul des dritten Empfängermoduls des Gateways nach einer Blockchain-Adresse der Anwendung oder des Anwendungsservers eines Empfängers sucht, die mit einer von der Anwendung oder dem Anwendungsserver des Empfängers erstellten Blockchain-Transaktion, die eine IP-Adresse der Anwendung oder des Anwendungsservers des Empfängers umfasst, verknüpft ist und diese IP-Adresse abruft;
VIII- das Sender-Submodul des dritten Moduls des Gateways durch die Ausführung von Codes auf einer Hardwarekomponente über das IP-Protokoll an die IP-Adresse der Anwendung oder des Anwendungsservers des Empfängers (7) mindestens: die verschlüsselte Nachricht Em, die Signatur Sig, den ephemeren öffentlichen Schlüssel ePk und die Blockchain-Adresse des Gateways (3) sendet;
IX- das Empfängermodul der Anwendung oder des Anwendungsservers des Empfängers durch die Ausführung von Codes auf einer Hardwarekomponente über das IP-Protokoll Daten vom Gateway (3) empfängt, die die verschlüsselte Nachricht Em, die Signatur Sig und den ephemeren öffentlichen Schlüssel ePk umfassen, und bei Empfang dieser Daten ein Verifizierungs-Submodul für die Signatur Sig der Anwendung oder des Anwendungsservers des Empfängers gestartet wird, das mittels einer Signaturberechnung mittels des im Speicherbereich aufgezeichneten privaten Schlüssels Sk durch Vergleichen des Berechnungsergebnisses mit der empfangenen Signatur Sig verifiziert, dass die empfangene Signatur Sig tatsächlich von dem Knoten (1) generiert wurde, der mit dem mindestens einen verbundenen Objekt kommuniziert, wobei, wenn die Verifizierung fehlschlägt, die Transaktion vom Modul gestoppt wird;
X- das Transaktionsmodul der Anwendung oder des Anwendungsservers des Empfängers, optional das erste Transaktionsmodul, durch die Ausführung von Codes auf einer Hardwarekomponente eine Blockchain-Transaktion an der Blockchain-Adresse des Empfängers erstellt, nachdem das Verifizierungs-Submodul die Verifizierung der Nachricht durchgeführt hat, wobei die Transaktion mindestens ein spezifisches Skript umfasst, das sich des ephemeren öffentlichen Schlüssels ePk bedient;
XI- durch die Ausführung von Codes auf einer Hardwarekomponente, Suche nach einer Transaktion der Blockchain-Transaktion (8), die vom Empfänger (7) in der Datenbank, in der die Blockchain-Transaktionen gespeichert sind, erstellt wurde und die ein spezifisches Skript mit einem ephemeren öffentlichen Schlüssel ePk enthält oder aus diesem resultiert, durch das Recherche-Submodul des vierten Blockchain-Managementmoduls des Gateways nach dem Senden der Daten bei Durchführung von Schritt VIII, dann, nachdem diese vom Empfänger (7) erstellte Blockchain-Transaktion gefunden wurde, Erstellung einer neuen Blockchain-Transaktion durch das Transaktionserstellungs-Submodul des vierten Blockchain-Managementmoduls des Gateways unter Verwendung der Ausgaben der vorherigen Transaktion als Eingaben und unter Verwendung eines Skripts, das den ephemeren privaten Schlüssel eSk beinhaltet;
XII- durch das Recherche-Submodul der Anwendung oder des Anwendungsservers des Empfängers, durch die Ausführung von Codes auf einer Hardwarekomponente, Suche in der Blockchain der vom Gateway (3) erstellten Transaktion, Abrufen des ephemeren privaten Schlüssels eSk und, optional, Aufzeichnung dieses ephemeren privaten Schlüssels eSk durch das Lese-/Schreib-Submodul auf dem maschinenlesbaren Medium der Anwendung oder des Anwendungsservers des Empfängers (7);
XIII- durch das Entschlüsselungs-Submodul der Anwendung oder eines Anwendungsservers des Empfängers (7), durch die Ausführung von Codes auf einer Hardwarekomponente, Entschlüsselung der Nachricht Em mittels des ephemeren privaten Schlüssels eSk, der vom Recherche-Submodul abgerufen wird.

2. Vorrichtung nach Anspruch 1, wobei das auslösende Ereignis für die Generierung und/oder das Senden des ephemeren privaten und des öffentlichen Schlüssels eSk, ePk durch ein erstes Gateway-Generierungsmodul und/oder das zweite Gateway-Sendermodul (3) mindestens ein Ereignis sein kann, das ausgewählt ist aus der folgenden Liste:
der Empfang einer Anfrage nach dem ephemeren öffentlichen Schlüssel ePk durch die drahtlose Technologie (2) seitens mindestens eines Knotens (1), der mit mindestens einem verbundenen Objekt (D) kommuniziert, das periodische Senden, durch ein Sendermodul des Gateways, optional das zweite Modul des Gateways (3), einer Signalisierungsnachricht, die den ephemeren öffentlichen Schlüssel ePk enthält,
oder eine von deren Kombinationen.

3. Vorrichtung nach Anspruch 1 oder 2, wobei das vierte Blockchain-Managementmodul ferner ein Verifizierungs-Submodul umfasst, das durch die Ausführung von Codes, die einer Hardwarekomponente zugeordnet sind, mittels des ephemeren privaten Schlüssels eSk verifiziert, dass diese Transaktion einen finanziellen Wert enthält, und optional Messen dieses finanziellen Werts, wobei das Verifizierungs-Submodul ferner so konfiguriert ist, dass es die Transaktion stoppt, wenn die Verifizierung fehlschlägt oder wenn der in der Transaktion enthaltene finanzielle Wert kleiner ist als ein Wert, der zuvor zwischen dem Gateway (3) und dem Knoten (1) ausgehandelt und in einem durch das Gateway (3) lesbaren Medium gespeichert wurde.

4. Kommunikationssystem (10), umfassend eine Vorrichtung nach einem der Ansprüche 1 bis 3, und wobei ferner der Knoten (1) mit dem mindestens einen verbundenen Objekt (D) kommuniziert, wobei der Knoten (1) mindestens ein oder mehrere Codemodule umfasst, die auf einer oder mehreren Verarbeitungs-Hardwarekomponenten wie einem Mikroprozessor ausgeführt werden können, um eine Maschine zu bilden, wobei die Module in mindestens einem maschinenlesbaren Medium gespeichert sind, und mindestens:
ein maschinenlesbares Medium, das einen Speicherbereich bildet, der einen privaten Schlüssel Sk umfasst, und eine Blockchain-Adresse des Empfängers, die von einer Anwendung oder einem Anwendungsserver des Empfängers (7) an den Knoten (1) übertragen wird;
ein Empfängermodul, das durch die Ausführung von Codes auf einer Hardwarekomponente den vom Gateway (3) gesendeten ephemeren öffentlichen Schlüssel ePk empfängt;
ein Generierungsmodul, das durch die Ausführung von Codes auf einer Hardwarekomponente eine Nachricht (m) als Reaktion auf Daten generiert, die vom verbundenen Objekt stammen, wobei dieses Modul ein Verschlüsselungs-Submodul umfasst, das mittels des vom Gateway (3) gesendeten ephemeren öffentlichen Schlüssels ePk diese Nachricht verschlüsselt, um die verschlüsselte Nachricht Em zu erhalten,
wobei das Verschlüsselungs-Submodul ferner eine Signatur durchführt, wobei die Signatur Sig die Verschlüsselung eines Hashwerts der verschlüsselten Nachricht und des vom Gateway empfangenen ephemeren öffentlichen Schlüssels ePk mittels des im Speicherbereich des Knotens (1) enthaltenen privaten Schlüssels Sk ist,
wobei das Generierungsmodul außerdem ein Sender-Submodul umfasst, das die Signatur Sig, die verschlüsselte Nachricht Em und die Blockchain-Adresse des Empfängers über das Funknetz (2) an das Gateway (3) sendet.

5. Kommunikationssystem (10) nach dem vorstehenden Anspruch, wobei das Verschlüsselungs-Submodul zunächst die vom Generierungsmodul generierte Nachricht m mittels eines symmetrischen Schlüssels K verschlüsselt, der mit der Anwendung oder dem Anwendungsserver (7) des Empfängers geteilt wird, um die verschlüsselte Nachricht Ek(m) zu erhalten, bevor das Verschlüsselungs-Submodul die Nachricht mittels des vom Gateway (3) gesendeten ephemeren öffentlichen Schlüssels ePk verschlüsselt, um die doppelt verschlüsselte Nachricht Em zu erhalten.

6. Kommunikationssystem (10) nach Anspruch 4 oder 5, umfassend:
die Anwendung oder den Anwendungsserver des Empfängers (7), wobei die Anwendung oder der Server mindestens ein oder mehrere Codemodule umfasst, die auf einer oder mehreren Verarbeitungs-Hardwarekomponenten wie einem Mikroprozessor ausführbar sind, um eine Maschine zu bilden, wobei die Module auf mindestens einem maschinenlesbaren Medium gespeichert sind, einschließlich mindestens:
ein Generierungsmodul, das durch Ausführung von Codes auf einer Hardwarekomponente (13) den privaten Schlüssel Sk und optional den symmetrischen Schlüssel K generiert und an den Knoten (1) sendet, der mit dem mindestens einen verbundenen Objekt kommuniziert;
ein maschinenlesbares Medium, das einen Speicherbereich bildet, der einen öffentlichen Schlüssel Pk umfasst, der komplementär zum privaten Schlüssel Sk ist und an den Knoten (1) übertragen wird;
ein erstes Transaktionsmodul, das durch die Ausführung von Codes auf einer Hardwarekomponente eine Blockchain-Transaktion an der Blockchain-Adresse der Anwendung oder des Anwendungsservers des Empfängers (7) erstellt, wobei diese Blockchain-Transaktion die IP-Adresse der Anwendung oder des Anwendungsservers des Empfängers umfasst;
ein Empfängermodul, das durch die Ausführung von Codes auf einer Hardwarekomponente vom Gateway (3) über ein Weitverkehrsnetzwerk, beispielsweise das Internet (4, 6), die Daten empfängt, die die verschlüsselte Nachricht Em, die Signatur Sig und den ephemeren öffentlichen Schlüssel ePk, der vom Gateway gesendet wird, umfassen, und bei Empfang dieser Daten ein Verifizierungs-Submodul für die Signatur Sig startet, das mittels einer Signaturberechnung mittels des im Speicherbereich aufgezeichneten privaten Schlüssels Sk durch Vergleichen des Berechnungsergebnisses mit der empfangenen Signatur Sig verifiziert, dass die empfangene Signatur Sig tatsächlich von dem Knoten (1) generiert wurde, der mit dem mindestens einen verbundenen Objekt kommuniziert, wobei das Modul die Transaktion stoppt, wenn diese Verifizierung fehlschlägt;
ein Transaktionsmodul, optional das erste Transaktionsmodul, das durch die Ausführung von Codes auf einer Hardwarekomponente eine Blockchain-Transaktion an der Blockchain-Adresse des Empfängers erstellt, nachdem das Verifizierungs-Submodul die Verifizierung der Nachricht durchgeführt hat, wobei die Transaktion mindestens ein spezifisches Skript umfasst, das sich des vom Gateway gesendeten ephemeren öffentlichen Schlüssels ePk bedient;
wobei das Transaktionsmodul ein Recherche-Submodul (11) umfasst, das, nachdem die verschlüsselte Nachricht Em, der ephemere öffentliche Schlüssel ePk und die Signatur Sig empfangen wurden oder die Transaktion vom Empfänger erstellt wurde, nach einer Blockchain-Transaktion sucht, die die Blockchain-Adresse des Gateways und ein Signaturskript beinhaltet, das sich des ephemeren privaten Schlüssels eSk bedient;
wobei das Transaktionsmodul ein Entschlüsselungs-Submodul umfasst, das, nachdem die Blockchain-Transaktion gefunden wurde, den ephemeren privaten Schlüssel eSk dieser Transaktion verwendet, um die vom Gateway durch das Empfängermodul empfangene verschlüsselte Nachricht des Knotens zu entschlüsseln, und vorzugsweise ferner mittels des mit dem Knoten geteilten symmetrischen Schlüssels K, wobei das Transaktionsmodul optional ferner ein Lese-/Schreib-Submodul und einen Speicherbereich umfasst, in dem das Lese-/Schreib-Submodul Daten aufzeichnet und das, nachdem die Blockchain-Transaktion gefunden wurde, den ephemeren privaten Schlüssel eSk dieser Transaktion aufzeichnet.

7. Kommunikationssystem (10) nach Anspruch 5 oder 6, wobei das Transaktionsmodul des Empfängers (7) die von diesem Modul erstellte Transaktion nach einer gewissen Zeit entsperrt, wenn das Gateway (3) die Transaktion während dieser Zeit nicht freigegeben hat.

8. Kommunikationssystem (10) nach einem der vorstehenden Ansprüche, wobei der Knoten (1) eine RSA-512-Verschlüsselung zur Durchführung der Signierung von Daten verwendet.

9. Kommunikationssystem (10) nach einem der vorstehenden Ansprüche, wobei das vierte Blockchain-Managementmodul des Gateways (3) ein Zeitmessungs-Submodul umfasst, das einer Anweisung zugeordnet ist, nach dem Empfang einer Blockchain-Transaktion vom Empfänger (7) eine Bestätigungszeit abzuwarten, vorzugsweise zumindest vor dem Empfang der Transaktion, die die Bereitstellung des geheimen ephemeren Schlüssels eSk erfordert.

10. System (1) nach einem der vorstehenden Ansprüche, wobei das Gateway (3) ferner ein erstes Generierungsmodul umfasst, das mindestens einen auf einer Hardwarekomponente ausgeführten Code umfasst, um den ephemeren privaten Schlüssel eSk und den ephemeren öffentlichen Schlüssel ePk, der komplementär zu diesem ephemeren privaten Schlüssel eSk ist, vorzugsweise als Reaktion auf ein auslösendes Ereignis zu generieren und diese Schlüssel ePk, eSk in einem maschinenlesbaren Medium speichert.

11. Verfahren zur Kommunikation zwischen mindestens einem verbundenen Objekt (D), das per Funk (2) entweder direkt an einen Knoten (1) oder mindestens an ein Gateway (3) angebunden ist, der/das über ein drahtgebundenes Netzwerk (4, 6) kommuniziert, mit mindestens einer Anwendung oder mindestens einem Anwendungsserver von mindestens einem Empfänger (7), wobei das Verfahren umfasst:
ein Gateway (3), das mehrere auf einer oder mehreren Verarbeitungs-Hardwarekomponenten wie einem Mikroprozessor ausführbare Codemodule umfasst, um eine Maschine zu bilden, wobei die Module auf mindestens einem maschinenlesbaren Medium gespeichert sind, einschließlich mindestens:
ein zweites Sendermodul;
ein drittes Empfängermodul, das ein Sender-Submodul umfasst;
ein viertes Blockchain-Managementmodul, das mindestens ein Recherche-Submodul und ein Transaktionserstellungs-Submodul umfasst;
einen Knoten (1), der mindestens ein oder mehrere auf einer oder mehreren Verarbeitungs-Hardwarekomponenten wie einem Mikroprozessor ausführbare Codemodule umfasst, um eine Maschine zu bilden, wobei die Module in mindestens einem maschinenlesbaren Medium gespeichert sind, und mindestens:
ein maschinenlesbares Medium;
ein Empfängermodul;
ein Generierungsmodul, das ein Verschlüsselungs-Submodul und ein Sender-Submodul umfasst;
eine Anwendung oder einen Anwendungsserver des Empfängers (7), die/der mindestens ein oder mehrere Codemodule umfasst, die auf einer oder mehreren Verarbeitungs-Hardwarekomponenten wie einem Mikroprozessor ausführbar sind, um eine Maschine zu bilden, wobei die Module auf mindestens einem maschinenlesbaren Medium gespeichert sind, einschließlich mindestens:
ein Generierungsmodul;
ein maschinenlesbares Medium;
ein erstes Transaktionsmodul;
ein Empfängermodul, das ein Verifizierungs-Submodul umfasst;
ein Transaktionsmodul, wobei optional das erste Transaktionsmodul ein Recherche-Submodul, ein Lese-/Schreib-Submodul und ein Entschlüsselungs-Submodul umfasst;
wobei die Module ihre Aktionen durch die Ausführung von Codes auf mindestens einer Hardwarekomponente durchführen;
und dass es mindestens die folgenden Schritte umfasst:
I- Generierung, durch das Generierungsmodul der Anwendung oder des Anwendungsservers des Empfängers (7), eines öffentlichen Schlüssels Pk und Aufzeichnung von diesem auf einem maschinenlesbaren Medium, das einen Speicherbereich bildet, dann Generierung des zum öffentlichen Schlüssel Pk komplementären privaten Schlüssels Sk und Senden an den Knoten (1), der mit dem mindestens einen verbundenen Objekt (D) kommuniziert, und Aufzeichnung des übertragenen privaten Schlüssels Sk auf dem lesbaren Medium des Knotens (1), das einen Speicherbereich bildet;
II- Erstellung einer Blockchain-Transaktion durch das Transaktionsmodul der Anwendung oder des Anwendungsservers des Empfängers (7) an der Blockchain-Adresse der Anwendung oder des Anwendungsservers des Empfängers, wobei diese Blockchain-Transaktion die IP-Adresse der Anwendung oder des Anwendungsservers des Empfängers (7) umfasst;
III- Senden eines ephemeren öffentlichen Schlüssels ePk, der auf mindestens einem vom Gateway-Rechner lesbaren Medium gespeichert ist, durch das zweite Sendermodul des Gateways (3) über das Funknetz (2) an den Knoten (1), der mit dem mindestens einen verbundenen Objekt kommuniziert;
IV- Empfang des vom zweiten Sendermodul des Gateways (3) gesendeten ephemeren öffentlichen Schlüssels ePk durch das Empfängermodul des Knotens (1);
V- Generierung einer Nachricht m durch das Generierungsmodul des Knotens (1) als Reaktion auf Daten, die von mindestens einem verbundenen Objekt stammen, Verschlüsselung der Nachricht m durch das Verschlüsselungs-Submodul des Generierungsmoduls mittels des ephemeren öffentlichen Schlüssels ePk, um die verschlüsselte Nachricht Em zu erhalten,
Durchführung einer Signatur Sig durch das Verschlüsselungs-Submodul, wobei die Signatur Sig die Verschlüsselung eines Hashwerts der verschlüsselten Nachricht und des vom Gateway empfangenen ephemeren öffentlichen Schlüssels ePk mittels des im Speicherbereich des Knotens (1) enthaltenen privaten Schlüssels Sk ist,
VI- Senden der Signatur Sig der verschlüsselten Nachricht Em und der Blockchain-Adresse des Empfängers durch das Sender-Submodul des Generierungsmoduls des Knotens (1) an das Gateway (3) über das Funknetz (2);
VII- Empfangen von Daten durch das dritte Empfängermodul des Gateways (3) und Suchen durch das Recherche-Submodul des dritten Empfängermoduls des Gateways nach einer Blockchain-Adresse der Anwendung oder des Anwendungsservers eines Empfängers, die mit einer von der Anwendung oder dem Anwendungsserver des Empfängers erstellten Blockchain-Transaktion verknüpft ist, die eine IP-Adresse der Anwendung oder des Anwendungsservers des Empfängers umfasst und diese IP-Adresse abruft,
VIII- Senden, durch das Sender-Submodul des dritten Moduls des Gateways über das IP-Protokoll an die IP-Adresse der Anwendung oder des Anwendungsservers des Empfängers (7), von mindestens: der verschlüsselten Nachricht Em, der Signatur Sig, des ephemeren öffentlichen Schlüssels ePk, und der Blockchain-Adresse des Gateways (3);
IX- Empfang, durch das Empfängermodul der Anwendung oder eines Anwendungsservers des Empfängers, von Daten des Gateways (3) durch das IP-Protokoll, umfassend die verschlüsselte Nachricht Em, die Signatur Sig, und den ephemeren öffentlichen Schlüssel ePk, und bei Empfang dieser Daten, Starten eines Verifizierungs-Submoduls für die Signatur Sig, und Verifizierung mittels einer Signaturberechnung mittels des im Speicherbereich aufgezeichneten privaten Schlüssels Sk durch Vergleichen des Berechnungsergebnisses mit der empfangenen Signatur Sig, dass die empfangene Signatur Sig tatsächlich von dem Knoten (1) generiert wurde, der mit dem mindestens einen verbundenen Objekt kommuniziert, wobei, wenn die Verifizierung fehlschlägt, die Transaktion vom Modul gestoppt wird;
X- Erstellung einer Blockchain-Transaktion an der Blockchain-Adresse des Empfängers durch das Transaktionsmodul der Anwendung oder eines Anwendungsservers des Empfängers, optional das erste Transaktionsmodul, nachdem das Verifizierungs-Submodul die Verifizierung der Nachricht durchgeführt hat, wobei die Transaktion mindestens ein spezifisches Skript umfasst, das sich des ephemeren öffentlichen Schlüssels ePk bedient;
XI- Suche nach einer Transaktion der Blockchain-Transaktion (8), die vom Empfänger (7) in der Datenbank, in der Blockchain-Transaktionen gespeichert sind, erstellt wurde und die ein spezifisches Skript mit dem ephemeren öffentlichen Schlüssel ePk enthält oder aus diesem resultiert, durch das Recherche-Submodul des vierten Blockchain-Managementmoduls des Gateways, nachdem die Daten bei Durchführung von Schritt VIII gesendet wurden, dann, nachdem diese vom Empfänger (7) erstellte Blockchain-Transaktion gefunden wurde, Erstellung einer neuen Blockchain-Transaktion durch das Transaktionserstellungs-Submodul des vierten Blockchain-Managementmoduls des Gateways unter Verwendung der Ausgaben der vorherigen Transaktion als Eingaben und unter Verwendung eines Skripts, das den ephemeren privaten Schlüssel eSk beinhaltet;
XII- Suche, in der Blockchain durch das Recherche-Submodul der Anwendung oder des Anwendungsservers des Empfängers, der vom Gateway (3) erstellten Transaktion, Abruf des ephemeren privaten Schlüssels eSk und optional Aufzeichnung dieses ephemeren privaten Schlüssels eSk durch das Lese-/Schreib-Submodul auf dem maschinenlesbaren Medium der Anwendung oder des Anwendungsservers des Empfängers (7);
XIII- Entschlüsselung der Nachricht Em durch das Entschlüsselungs-Submodul der Anwendung oder eines Anwendungsservers des Empfängers (7) mittels des vom Recherche-Submodul abgerufenen ephemeren privaten Schlüssels eSk.

12. Kommunikationsverfahren nach Anspruch 11, ferner umfassend in Schritt XI eine Verifizierung durch das Recherche-Submodul des vierten Blockchain-Managementmoduls des Gateways (3), dass diese Transaktion einen finanziellen Wert enthält, und vorzugsweise eine Messung dieses finanziellen Werts, wobei die Transaktion vom Submodul gestoppt wird, wenn die Verifizierung fehlschlägt oder wenn der in der Transaktion enthaltene finanzielle Wert kleiner ist als ein Wert, der zuvor zwischen dem Gateway (3) und dem Knoten (1) ausgehandelt wurde.

13. Kommunikationsverfahren nach Anspruch 11 oder 12, ferner umfassend in Schritt V, dass die Nachricht (m) zuerst vom Verschlüsselungs-Submodul des Generierungsmoduls des Knotens (1) unter Verwendung eines symmetrischen Schlüssels K, der mit einer Anwendung oder einem Anwendungsserver des Empfängers (7) geteilt wird, verschlüsselt wird, um die verschlüsselte Nachricht Ek(m) zu erhalten, bevor die Verschlüsselung mittels des ephemeren öffentlichen Schlüssels ePk durchgeführt wird, um die doppelt verschlüsselte Nachricht Em zu erhalten, wobei die Entschlüsselung der doppelt verschlüsselten Nachricht Em durch das Entschlüsselungs-Submodul der Anwendung oder des Anwendungsservers des Empfängers (7) in Schritt XIII dann mittels des ephemeren privaten Schlüssels eSk und dann des symmetrischen Schlüssels (K) durchgeführt wird.

14. Kommunikationsverfahren nach einem der Ansprüche 11 bis 13, wobei das Gateway (3) ein erstes Generierungsmodul umfasst, wobei das Verfahren ferner vor Schritt **III** einen ersten Schritt der Generierung, durch jedes der ersten Generierungsmodule der Gateways, eines ephemeren privaten Schlüssels eSk1, eSk2 und eines ephemeren öffentlichen Schlüssels ePk1, ePk2, der komplementär zu dem ephemeren privaten Schlüssel, eSk1, eSk2, ist, vorzugsweise als Reaktion auf ein auslösendes Ereignis, und die Speicherung dieser Schlüssel, ePk1, eSk1, ePk2, eSk2, im maschinenlesbaren Medium des Gateways umfasst.

## Claims

1. Device for communication between at least one connected object (D) linked via radio (2) either directly to a node (1) or to at least one gateway (3) communicating via a wired network (4, 6) and at least one application or at least one application server of at least one recipient (7), the device comprising:
a gateway (3) comprising a plurality of modules of codes that are executable on one or more processing hardware components such as a microprocessor to form a machine, the modules being stored in at least one machine-readable medium and including at least: a second transmitter module;
a third receiver module comprising a transmitter sub-module;
a fourth blockchain management module comprising at least a search sub-module and a transaction creation sub-module;
a node (1) comprising at least one or more modules of codes that are executable on one or more processing hardware components such as a microprocessor to form a machine, the modules being stored in at least one machine-readable medium and at least:
a machine-readable medium; a receiver module;
a generator module comprising an encryption sub-module and a transmitter sub-module;
an application or application server of the recipient (7) comprising at least one or more modules of codes that are executable on one or more processing hardware components such as a microprocessor to form a machine, the modules being stored in at least one machine-readable medium and including at least:
a generation module;
a machine-readable medium;
a first transaction module;
a receiver module comprising a verification sub-module;
a transaction module, optionally the first transaction module comprising a search sub-module, a read/write sub-module and a decryption sub-module;
the modules perform their actions by executing codes on at least one hardware component;
wherein:
I- the generation module of the application or application server of the recipient (7), by executing codes on a hardware component, generates a public key, Pk, and saves in a machine-readable medium constituting a memory space, then generates and sends the private key, Sk, which is complementary to the public key, Pk, to the node (1) communicating with the at least one connected object (D), and saves the transmitted private key, Sk, in the readable medium of the node (1) constituting a memory space;
II- the transaction module of the application or application server of the recipient (7) creates, by executing codes on a hardware component, at the blockchain address of the application or application server of the recipient, said blockchain transaction comprising the IP address of the application or application server of the recipient (7);
III- the second transmitter module of the gateway (3), by executing codes on a hardware component, sends an ephemeral public key, ePk, stored in at least one medium that is readable by the machine of the gateway, over the radio network (2) to the node (1) communicating with the at least one connected object;
IV- the receiver module of the node (1), by executing codes on a hardware component, receives the ephemeral public key, ePk, sent by the second transmitter module of the gateway (3);
V- the generator module of the node (1), by executing codes on a hardware component, generates a message, m, in response to data from the at least one connected object, and the encryption sub-module of the generator module encrypts the message, m, by means of the ephemeral public key, ePk, by executing codes on a hardware component, in order to obtain the encrypted message, Em, and
the encryption sub-module, by executing codes on a hardware component, creates a signature, Sig, which is the encryption, from a hash coding of the encrypted message and the ephemeral public key, ePk, received from the gateway, by means of the private key, Sk, contained on the memory space of the node (1),
VI- the transmitter sub-module of the generator module of the node (1), by executing codes on a hardware component, sends the signature, Sig, of the encrypted message, Em, and the blockchain address of the recipient to the gateway (3) via the radio network (2);
VII- the third receiver module of the gateway (3), by executing codes on a hardware component, receives the data and the search sub-model of the third receiver module of the gateway searches for a blockchain address of an application or application server of a recipient linked to a blockchain transaction created by the application or application server of the recipient comprising an IP address of the application or application server of the recipient and retrieves said IP address;
VIII- the transmitter sub-module of the third gateway module, by executing codes on a hardware component, sends via IP protocol, to the IP address of the application or application server of the recipient (7) at least: the encrypted message, Em, the signature, Sig, the ephemeral public key, ePk, and the blockchain address of the gateway (3);
IX- the receiver module of the application or application server of the recipient, by executing codes on a hardware component, receives, via IP protocol, data from the gateway (3) comprising the encrypted message, Em, the signature, Sig, and the ephemeral public key, ePk, and upon receipt of said data a sub-module for verifying the signature, Sig, of the application or application server of the recipient is launched which verifies, by means of a signature calculation using the private key, Sk, saved on the memory space by comparing the result of the calculation with the received signature, Sig, that the received signature, Sig, has indeed been generated by the node (1) communicating with at least the at least one connected object, the transaction being stopped by the module if the verification fails;
X- the transaction module of the application or application server of the recipient, optionally the first transaction module, by executing codes on a hardware component, creates a blockchain transaction at the blockchain address of the recipient once the verification sub-module has verified the message, the transaction comprising at least one specific script, using the ephemeral public key, ePk;
XI- by executing codes on a hardware component, the search sub-module of the fourth blockchain management module of the gateway searches for a transaction of the blockchain transaction (8) created by the recipient (7) in the database storing blockchain transactions and which comprises or results from a specific script with the ephemeral public key, ePk, once the data has been sent in step VIII, then, once said blockchain transaction created by the recipient (7) has been found, the transaction creation sub-module of the fourth blockchain management module of the gateway creates a new blockchain transaction, using as inputs the outputs of the previous transaction, and using a script incorporating the ephemeral private key, eSk;
XII- the search sub-module of the application or application server of the recipient, by executing codes on a hardware component, searches the blockchain for the transaction created by the gateway (3), retrieving the ephemeral private key, eSk, and, optionally, the read/write sub-module saves said ephemeral private key, eSk, in the medium that is readable by the machine of the application or application server of the recipient (7);
XIII- the decryption sub-module of the application or application server of the recipient (7), by executing codes on a hardware component, decrypts the message, Em, using the ephemeral private key, eSk, retrieved by the search sub-module.

2. Device according to claim 1, wherein the event triggering the generation and/or sending of ephemeral private and public keys, eSk, ePk, by a first generator module of the gateway and/or the second transmitter module of the gateway (3) can be at least one event selected from the following list:
the wireless technology (2) receiving a request for the ephemeral public key, ePk, from the at least one node (1) communicating with the at least one connected object (D), periodic transmission, by a transmission module of the gateway, optionally the second module of the gateway (3), of a signaling message containing the ephemeral public key, ePk,
or one of the combinations thereof.

3. Device according to claim 1 or 2, wherein the fourth blockchain management module further comprises a verification sub-module which, by executing codes associated with a hardware component, verifies by means of the ephemeral private key, eSk, that said transaction contains a financial value, and optionally measures said financial value, the verification sub-module being further configured to stop the transaction if the verification fails or if the financial value contained in the transaction is less than a value that is previously negotiated between the gateway (3) and the node (1) and is stored in a medium that is readable by the gateway (3).

4. Communication system (10) comprising a device according to one of claims 1 to 3, and further the node (1) communicating with the at least one connected object (D), the node (1) comprising at least one or more modules of codes that are executable on one or more processing hardware components such as a microprocessor to form a machine, the modules being stored in at least one machine-readable medium, and at least:
a machine-readable medium constituting a memory space comprising a private key, Sk, and a blockchain address of the recipient transmitted by an application or application server of the recipient (7) to the node (1);
a receiver module which, by executing codes on a hardware component, receives the ephemeral public key, ePk, sent by the gateway (3);
a generator module which, by executing codes on a hardware component, generates a message (m) in response to data from the connected object, said module comprising an encryption sub-module which, by means of the ephemeral public key, ePk, sent by the gateway (3), encrypts this message in order to obtain the encrypted message, Em,
the encryption sub-module also creates a signature, the signature, Sig, being the encryption, from a hash coding of the encrypted message and the ephemeral public key, ePk, received from the gateway, by means of the private key, Sk, contained on the memory space of the node (1),
the generator module also comprises a transmitter sub-module that sends the signature, Sig, the encrypted message, Em, and the blockchain address of the recipient to the gateway (3) via the radio network (2).

5. Communication system (10) according to the preceding claim, wherein the encryption sub-module encrypts the message, m, generated by the generator module a first time by means of a symmetric key, K, shared with the application or application server of the recipient (7) in order to obtain the encrypted message, Ek(m), before the encryption sub-module encrypts the message by means of the ephemeral public key, ePk, sent by the gateway (3), in order to obtain the twice-encrypted message, Em.

6. Communication system (10) according to claim 4 or 5, comprising:
the application or application server of the recipient (7), the application or server comprising at least one or more modules of codes that are executable on one or more processing hardware components such as a microprocessor to form a machine, the modules being stored in at least one machine-readable medium and including at least:
a generation module which, by executing codes on a hardware component, (13) generates and sends the private key, Sk, and optionally the symmetric key, K, to the node (1) communicating with the at least one connected object;
a machine-readable medium constituting a memory space comprising a public key, Pk, which is complementary to the private key, Sk, transmitted to the node (1);
a first transaction module which, by executing codes on a hardware component, creates a blockchain transaction at the blockchain address of the application or application server of the recipient (7), said blockchain transaction comprising the IP address of the application or application server of the recipient;
a receiver module which, by executing codes on a hardware component, receives from the gateway (3), via a long-distance network, e.g. the Internet (4, 6), the data comprising the encrypted message, Em, the signature, Sig, and the ephemeral public key, ePk, sent by the gateway, and upon receipt of said data, launches a signature verification sub-module, Sig, which verifies by means of a signature calculation using the private key, Sk, saved on the memory space by comparing the result of the calculation with the received signature, Sig, that the received signature, Sig, has indeed been generated by the node (1) communicating with the at least one connected object, the module stopping the transaction if this verification fails;
a transaction module, optionally the first transaction module, which, by executing codes on a hardware component, creates a blockchain transaction at the blockchain address of the recipient once the verification sub-module has verified the message, the transaction comprising at least one specific script, using the ephemeral public key, ePk sent by the gateway;
the transaction module comprising a search sub-module (11) which, once the encrypted message, Em, the ephemeral public key, ePk, and the signature, Sig, have been received, or the transaction has been created by the recipient, searches for a blockchain transaction incorporating the blockchain address of the gateway and a signature script using the ephemeral private key, eSk;
the transaction module comprising a decryption sub-module which, once the blockchain transaction has been found, uses the ephemeral private key, eSk, of said transaction to decrypt the encrypted message of the node received from the gateway by the receiver module, and preferably additionally by means of the symmetric key, K, shared with the node, the transaction module optionally further comprising a read/write sub-module and a memory space in which the read/write sub-module saves data and which, once the blockchain transaction has been found, saves the ephemeral private key, eSk, of said transaction.

7. Communication system (10) according to claim 5 or 6, wherein the transaction module of the recipient (7) unlocks the transaction created by said module after a certain period of time, if the gateway (3) has not unblocked the transaction within this period of time.

8. Communication system (10) according to any one of the preceding claims, wherein the node (1) uses RSA-512 encryption to perform its data signature.

9. Communication system (10) according to any one of the preceding claims, wherein the fourth blockchain management module of the gateway (3) comprises a time measurement sub-module associated with an instruction to wait for a confirmation time after receipt of a blockchain transaction from the recipient (7), preferably at least before receipt of the transaction requiring the ephemeral secret key, eSk to be provided.

10. System (1) according to any one of the preceding claims, wherein the gateway (3) further comprises a first generator module which comprises at least one code executed on a hardware component, for generating the ephemeral private key, eSk, and the ephemeral public key, ePk, which is complementary to said ephemeral private key, eSk, preferably in response to a triggering event, and stores these keys, ePk, eSk, in a machine-readable medium.

11. Method for communication between at least one connected object (D) linked via radio (2) either directly to a node (1) or to at least one gateway (3) communicating via a wired network (4,6) with at least one application or at least one application server of at least one recipient (7), the method comprising:
a gateway (3) comprising a plurality of modules of codes that are executable on one or more processing hardware components such as a microprocessor to form a machine, the modules being stored in at least one machine-readable medium and including at least:
a second transmitter module;
a third receiver module comprising a transmitter sub-module;
a fourth blockchain management module comprising at least a search sub-module and a transaction creation sub-module;
a node (1) comprising at least one or more modules of codes that are executable on one or more processing hardware components such as a microprocessor to form a machine, the modules being stored in at least one machine-readable medium and at least:
a machine-readable medium;
a receiver module;
a generator module comprising an encryption sub-module and a transmitter sub-module;
an application or application server of the recipient (7) comprising at least one or more modules of codes that are executable on one or more processing hardware components such as a microprocessor to form a machine, the modules being stored in at least one machine-readable medium and including at least:
a generation module;
a machine-readable medium
a first transaction module;
a receiver module comprising a verification sub-module
a transaction module, optionally the first transaction module comprising a search sub-module, a read/write sub-module and a decryption sub-module;
the modules perform their actions by executing codes on at least one hardware component;
and that the method comprises at least the following steps:
I- the generation module of the application or application server of the recipient (7) generating a public key, Pk, and saving in a machine-readable medium constituting a memory space, then generating and sending the private key, Sk, which is complementary to the public key, Pk, to the node (1) communicating with the at least one connected object (D), and saving the transmitted private key, Sk, in readable medium of the node (1) constituting a memory space
II- the transaction module of the application or application server of the recipient (7) creating a blockchain transaction at the blockchain address of the application or application server of the recipient, said blockchain transaction comprising the IP address of the application or application server of the recipient (7);
III- the second transmitter module of the gateway (3) sending an ephemeral public key, ePk, stored in at least one medium that is readable by the machine of the gateway, over the radio network (2) to the node (1) communicating with the at least one connected object;
IV- the receiver module of the node (1) receiving the ephemeral public key, ePk, sent by the second transmitter module of the gateway (3);
V- the generator module of the node (1) generating a message, m, in response to data from the at least one connected object, the encryption sub-module of the generator module encrypting the message, m, using the ephemeral public key, ePk, in order to obtain the encrypted message, Em,
the encryption sub-module creating a signature, Sig, the signature, Sig, being the encryption, from a hash coding of the encrypted message and the ephemeral public key, ePk, received from the gateway, by means of the private key, Sk, contained on the memory space of the node (1),
VI- the transmitter sub-module of the generator module of the node (1) sending the signature, Sig, the encrypted message, Em, and the blockchain address of the recipient to the gateway (3) via the radio network (2);
VII- the third receiver module of the gateway (3) receiving data and the search sub-model of the third receiver module of the gateway searching for a blockchain address of an application or application server of the recipient linked to a blockchain transaction created by the application or application server of the recipient comprising an IP address of the application or application server of the recipient and retrieving said IP address,
VIII- the transmitter sub-module of the third module of the gateway sending, via IP protocol, to the IP address of the application or application server of the recipient (7) at least: the encrypted message, Em, the signature, Sig, the ephemeral public key, ePk, and the blockchain address of the gateway (3);
IX- the receiver module of the application or an application server of the recipient receiving, via IP protocol, data from the gateway (3) comprising the encrypted message, Em, the signature, Sig, and the ephemeral public key, ePk, and upon receipt of said data, launching a sub-module for verifying the signature, Sig, and verifying by means of a signature calculation using the private key, Sk, saved on the memory space by comparing the result of the calculation with the received signature, Sig, that the received signature, Sig, has indeed been generated by the node (1) communicating with the at least one connected object, the transaction being stopped by the module if the verification fails;
X- the transaction module of the application or an application server of the recipient, optionally the first transaction module, creating a blockchain transaction at the blockchain address of the recipient, once the verification sub-module has verified the message, the transaction comprising at least one specific script, using the ephemeral public key, ePk;
XI- the search sub-module of the fourth blockchain management module of the gateway searching for a transaction of the blockchain transaction (8) created by the recipient (7) in the database storing blockchain transactions and which comprises or results from a specific script with an ephemeral public key, ePk, once the data has been sent in step VIII, then, once said blockchain transaction created by the recipient (7) has been found, the transaction creation sub-module of the fourth blockchain management module of the gateway creating a new blockchain transaction, using as inputs the outputs of the previous transaction, and using a script incorporating the ephemeral private key, eSk;
XII- the search sub-module of the application or application server of the recipient searching the blockchain for the transaction created by the gateway (3), retrieving the ephemeral private key, eSk, and, optionally, the read/write sub-module saving said ephemeral private key, eSk, in the medium that is readable by the machine of the application or application server of the recipient (7).
XIII- the decryption sub-module of the application or an application server of the recipient (7) decrypting the message, Em, using the ephemeral private key, eSk, retrieved by the search sub-module.

12. Communication method according to claim 11 which further comprises in step XI a verification by the search sub-module of the fourth blockchain management module of the gateway (3) that said transaction contains a financial value, and preferably a measurement of said financial value, the transaction being stopped by the sub-module if the verification fails or if the financial value contained in the transaction is less than a value previously negotiated between the gateway (3) and the node (1).

13. Communication method according to claim 11 or 12, which further comprises, in step V, a first encryption of the message (m) is performed by the encryption sub-module of the generator module of the node (1) by means of a symmetric key, K, shared with an application or application server of the recipient (7) in order to obtain the encrypted message, Ek(m), before encrypting by means of the ephemeral public key, ePk, is performed, in order to obtain the twice-encrypted message, Em, wherein the decryption of the twice-encrypted message, Em, by the decryption sub-module of the application or an application server of the recipient (7) in step XIII is then performed by means of the ephemeral private key, eSk, followed by the symmetric key (K).

14. Communication method according to one of claims 11 to 13, wherein the gateway (3) comprises a first generator module, the method further comprising, prior to step **III,** a first step of each of the first generator modules of the gateway generating an ephemeral private key, eSk1, eSk2, and an ephemeral public key, ePk1, ePk2, which is complementary to said ephemeral private key, eSk11, eSk2, preferably in response to a triggering event, and storing these keys, ePk1, eSk1, ePk2, eSk2, in the medium that is readable by the machine of the gateway.
